Europäisches Patentamt

European Patent Office

Office européen des brevets

(19)

(11) Numéro de publication: **0 022 704**
**B1**

(12) **FASCICULE DE BREVET EUROPEEN**

(45) Date de publication du fascicule du brevet: **14.12.83**

(21) Numéro de dépôt: **80401003.1**

(22) Date de dépôt: **02.07.80**

(51) Int. Cl.³: **H 04 N 1/032,**
**H 04 N 1/18, B 41 J 3/20**

(54) Barrette d'impression d'image, son procédé de fabrication et dispositif d'impression d'image.

(30) Priorité: **13.07.79 FR 7918269**
**13.07.79 FR 7918270**

(43) Date de publication de la demande:
**21.01.81 Bulletin 81/3**

(45) Mention de la délivrance du brevet:
**14.12.83 Bulletin 83/50**

(84) Etats contractants désignés:
**BE DE GB IT LU NL**

(56) Documents cités:
**EP - A - 0 013 161**
**DE - A - 2 350 273**
**DE - A - 2 551 957**
**DE - A - 2 602 194**
**DE - A - 2 751 381**
**DE - A - 2 828 356**
**FR - A - 2 110 322**
**FR - A - 2 155 840**
**US - A - 3 624 661**
**US - A - 3 813 492**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **de Kermadec, Alain**
**15, rue des Anciens Béliers**
**F-78730 Rochefort en Yvelines (FR)**
Inventeur: **Delanoe, Christian**
**44, rue Albert Sarraut**
**F-78000 Versailles (FR)**

(74) Mandataire: **Weinmiller, Jürgen et al,**
**Zeppelinstrasse 63**
**D-8000 München 80 (DE)**

Courier Press, Leamington Spa, England.

Barrette d'impression d'image, son procédé de fabrication et dispositif d'impression d'image

La présente invention porte sur une barrette d'impression d'image sur un papier sensible. La barrette d'impression est, en particulier, utilisée dans un récepteur de fac-similés pour l'impression du document à restituer.

Dans une installation de transmission fac-similés, la restitution d'un document analysé dont le contenu est transmis au récepteur est assurée par une tête ou barrette d'impression, venant balayer un papier sensible, selon des lignes successives. La tête ou la barrette est excitée par le signal d'information reçu par le récepteur et définissant le contenu d'une ligne de balayage du document analysé pour l'impression des points d'image successifs le long d'une ligne de balayage du papier sensible.

La formation sur le papier de points d'image consiste à déclencher, par réaction, une modification localisée de l'aspect du papier utilisé, par exemple une modification de coloration. Ainsi par exemple, on sait qu'avec un certain type de papier électro-catalytique contenant un matériau catalyseur de la réduction des ions argent, l'impression d'une point d'image est obtenue par application localisée sur le papier d'un stylet contenant de l'argent et passage d'un courant électrique entre le stylet et le papier, on provoque ainsi une réduction des ions argent qui se forment, accompagnée d'une modification de coloration du papier.

L'impression complète d'une ligne d'image peut être obtenue par une barrette d'impression comportant autant de stylets d'impression que de points d'image dans la ligne. L'impression de lignes d'image successives est obtenue par déplacement relatif pas à pas du papier et de la barrette d'impression. Une telle barrette d'impression peut être constituée par un empilement de plaquettes conductrices isolées les unes des autres et dont une extrémité de chacune d'elles forme l'un des stylets. La barrette d'impression peut aussi être constituée par un réseau de rubans conducteurs portés par une plaquette isolante et isolés les uns des autres et dont une extrémité est liée à, porte ou forme l'un des stylets. La barrette d'impression peut également incorporer un dispositif de commande ou d'adressage des différents stylets.

Ainsi, selon la demande de brevet fraçais publiée FR—A—2 394 945 au nom de la demanderesse, la barrette d'impression, formée par un empilement de plaquettes conductrices disposées au pas de définition des points d'image sur la longueur d'une ligne d'impression et isolées les unes des autres, comporte, en outre, n matrices diagonales à diodes, pour l'adressage des stylets, dont les colonnes respectives sont constituées par lesdites plaquettes alimentées respectivement à travers des résistances formées chacune par un dépôt de matériau résistif sur une des faces de chacune des plaquettes et dont les lignes communes aux n matrices et alimentées individuellement sont constituées par des conducteurs électriques reliés aux plaquettes à travers des diodes formées chacune par une pastille de matériau semi-conducteur portée par chaque plaquette.

De manière comparable, selon la demande de brevet français FR—A—2 394 399 au nom de la demanderesse, la barrette d'impression à réseau de rubans conducteurs comporte, en outre, n matrices diagonales à diodes, pour l'adressage des stylets, dont les colonnes respectives sont formées par les rubans conducteurs dudit réseau et sont alimentées à travers des résistances électriques en contact électrique avec les rubans respectifs et dont les lignes, communes aux n matrices et alimentées individuellement, sont constituées par des rubans conducteurs d'un deuxième réseau reliés aux rubans conducteurs du réseau précédent (colonnes) à travers des diodes montées sur les rubans conducteurs formant les lignes ou les colonnes des matrices.

Dans ces systèmes d'adressage et de commande des stylets, les diodes permettent de court-circuiter, ou non, les stylets d'une même matrice, indépendamment les uns des autres; les diodes permettent aussi de sélectionner une seule matrice parmi les n existantes. Les stylets sont ainsi adressés et alimentés individuellement, à la suite les uns des autres.

On connaît aussi des imprimantes du type dit parallèle susceptibles d'imprimer simultanément ou quasi simultanément la totalité d'une ligne d'impression. Le document DE—A—2 828 356 décrit une imprimante thermique de ce type assurant l'impression de caractères alpha-numériques dans une ligne qui peut comporter jusqu'à 80 caractères, chaque caractère étant imprimé sous forme d'un ensemble de points sélectionnés dans une matrice de $5 \times 7$ points possibles.

Cette imprimante parallèle comporte essentiellement une mémoire RAM à 80 positions de mémoires adressables enregistrant les signaux traduisant les caractères imprimables de la ligne à imprimer, un générateur de caractères transformant les signaux de caractères prélevés dans la mémoire RAM en signaux les définissant dans la forme matricielle de $5 \times 7$ points, un registre à décalage à 400 étages recevant les caractères imprimables définis sous forme matricielle de la ligne à imprimer et une logique de commande d'impression commandant le générateur de caractères, le registre à décalage et la tête d'impression.

Dans cette imprimante, le registre à décalage est à entrée série, a une entrée de décalage et 400 sorties en parallèle reliées à 400 éléments d'impression de la tête d'impression sur papier thermique.

Les caractères d'une ligne, complète ou non, étant chargés dans la mémoire RAM, la logique d'impression déclenche l'impression de cette ligne et règle les phases successives du processus d'impression de chacune des sept lignes élémentaires issues de la forme matricielle de 5×7 points des caractères. Ainsi, pour chaque ligne élémentaire, le processus d'impression se déroule selon les phases suivantes:

— présentation du contenu de chacune des 80 positions de mémoires de la mémoire RAM au générateur de caractères qui délivre en série la configuration à 5 bits de chacun des caractères au registre à décalage, ceci pendant la durée d'un train d'impulsions d'horloge déclenché par la logique de commande et à partir duquel est assurée la commande de décalage du registre,
— émission d'une impulsion de chauffage à la tête d'impression, qui échauffe tous les éléments d'impression validés par les étages correspondants du registre à décalage,
— positionnement du papier thermique, en vue de l'impression de la ligne élémentaire suivante.

Dans ce document, la structure de l'imprimante décrite avec registre à décalage pour la commande quasi simultanée des éléments d'impression n'a été définie que sous forme de schémas-blocs. La réalisation concrète de cette imprimante, du fait même de l'utilisation du registre à décalage dont les sorties en parallèle sont à connecter aux éléments d'impression pour leur commande, demeure peu aisée, et ceci d'autant moins que les imprimantes actuelles souhaitées sont à haute définition d'impression, telle que de 8 points au millimètre, soit de 1.728 points par ligne de 216 mm, et peu compatible avec une présentation finale compacte de l'imprimante. De plus, cette imprimante résultante a une capacité maximale d'impression, le long d'une ligne, limitée par les registres à décalage existants dans le commerce et les possibilités de connexion de leurs sorties en parallèle aux éléments d'impression.

La présente invention a pour but de réaliser une imprimante du type parallèle précité, à registre à décalage de commande de ses éléments d'impression de conception particulière permettant l'obtention d'une imprimante, d'une part de structure compacte sous forme de barrette dans laquelle les interconnexions électriques convenables sont issues directement du montage des éléments qu'elle comporte et, d'autre part, de structure modulaire conduisant à une barrette dimensionnable à volonté en longueur indépendamment de sa définition d'impression donnée.

La présente invention a donc pour objet une barrette d'impression d'image, en tout ou rien, sur un papier électrosensible balayé par lignes de balayage successives par ladite barrette, comportant autant de stylets, isolés les uns des autres et formant une zone de stylets de ladite barrette, que de points d'image rentrant dans chaque ligne de balayage et comportant une mémoire, du type registre à décalage, recevant des données définissant lesdits points d'image, ayant une entrée de commande de décalage et des entrées d'alimentation, et ayant des sorties en parallèle pour la commande individuelle desdits stylets lors d'une commande d'impression, et donc l'inscription desdits points d'image sur ledit papier, caractérisée en ce que ladite mémoire est constituée par 2 m pastilles registres à n égages de mémoire, ayant chacune une entrée série de données, n sorties en parallèle, une sortie série de données, et des entrées de commande comprenant une entrée horloge de commande de décalage des données d'un étage au suivant, deux entrées d'alimentation définissant deux niveaux de tension correspondant aux niveaux desdites données, et une entrée d'inhibition de ses n sorties en parallèle, m et n étant deux nombres entiers tels que le produit 2m. n soit au moins égal au nombre de stylets, portées par au moins un film et montées en série m par m en ayant, d'une part les entrées horloge, d'autre part les entrées d'inhibition et, par ailleurs, les entrées d'alimentation mises en parallèle, pour y constituer deux registres à décalage distincts, chacun à une entrée série de données et à m . n sorties en parallèle connectées, pour une partie au moins des sorties en parallèle successives de ses m pastilles en série constituant alors les sorties en parallèle dites utiles des m pastilles du registre considéré, respectivement aux stylets de rangs de même parité dans ladite zone des stylets, c'est-à-dire aux stylets de rangs impairs et aux stylets de rangs pairs dans la zone des stylets pour l'un et l'autre desdits registres respectivement. En ce qui concerne des réalisations préférées de la barrette selon l'invention, d'un dispositf d'impression d'image mettant en application cette barrette, ainsi que d'un procédé de réalisation d'une telle barrette, référence est faite aux sous-revendications.

L'invention sera décrite ci-après plus en détail à l'aide de certaines mises en oeuvre et des dessins. Dans ceux-ci,

— la figure 1 représente le schéma électrique de la barrette selon l'invention avec une organisation particulière des stylets,
— la figure 2 représente un exemple de schéma logique d'un des composants électriques de la barrette,
— la figure 3 représente un premier mode de réalisation de la barrette,
— la figure 4 représente une variante de réalisation donnée en regard de la figure 3,
— la figure 5 représente un autre mode de réalisation de la barrette,
— la figure 6 représente une variante de réalisation donnée en regard de la figure 5,

— la figure 7 représente un autre mode de réalisation de la barrette,

— la figure 8 représente une variante de réalisation donnée en regard de la figure 7,

— les figures 9 et 10 représentent deux types de barrettes conformes à celle de la figure 7,

— la figure 11 représente un ensemble logique de commande de la barrette,

— la figure 12 est un diagramme dans le temps illustrant plusieurs signaux élaborés par l'ensemble logique de commande de la figure 11,

— la figure 13 représente en vue éclatée une demi-barrette conforme à l'invention, selon une variante de réalisation,

— la figure 14 représente certains éléments rentrant dans la barrette illustrée dans la figure 13, pour la constitution de l'un des registres à décalage,

— la figure 15 est une variante donnée par rapport à la figure 14,

— la figure 16 concerne une autre variante donné par rapport à la figure 14,

— la figure 17 représente une vue de boute d'une barrette conforme à celle illusttrée dans la figure 13,

— la figure 18 est une vue en coupe transversale de la demi-barrette selon la figure 13 et du type de celle de la figure 17.

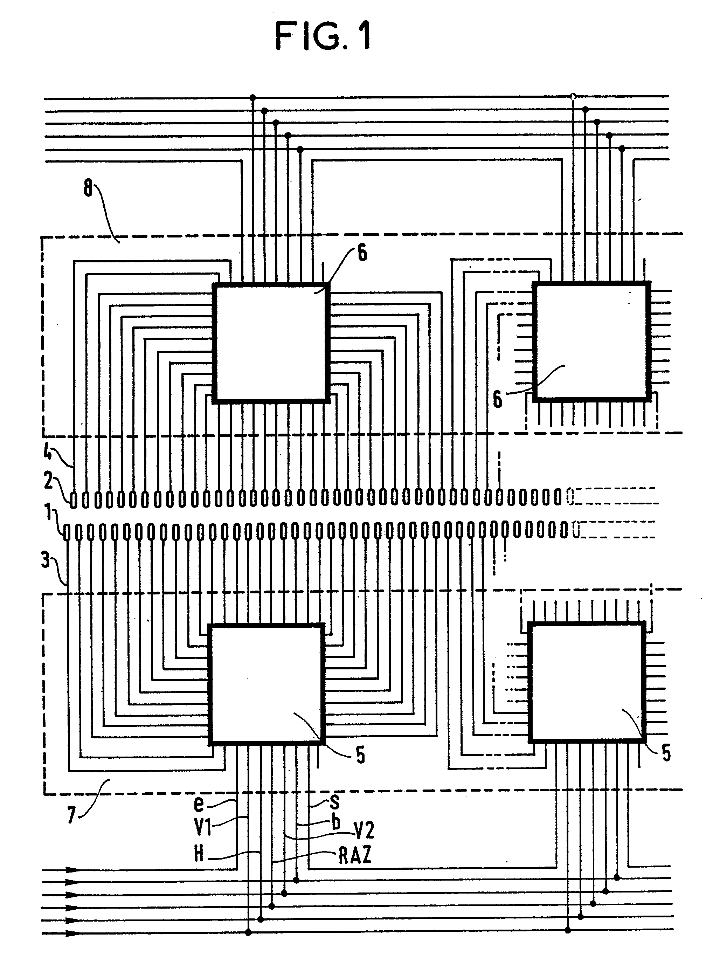

Dans la figure 1, on a illustré le schéma électrique d'une barrette d'impression selon l'invention. La barrette comporte des stylets tels que 1 et 2, en nombre égal au nombre de points d'image rentrant dans une ligne de balayage du document à reproduire sur papier électro-sensible balayé ligne par ligne par la barrette. Dans cette figure 1, les stylets sont organisés en deux rangées séparées l'une de l'autre par un pas de balayage ligne du papier électro-sensible, c'est-à-dire par une ligne de balayage du papier, définissant entre les rangées une ligne d'isolement entre les stylets de l'une et de l'autre rangée. Dans chacune de ces deux rangées, les stylets sont répartis à pas régulier égal au double du pas de définition des points d'image le long d'une ligne de balayage; les stylets d'une rangée sont respectivement disposés en regard des intervalles entre stylets de l'autre rangée.

Des pistes conductrices telles que 3 et 4, reliées respectivement aux stylets, partent de part et d'autre de l'ensemble des deux rangées de stylets et définissant deux réseaux pour l'alimentation individuelle des stylets.

Des pastilles à étages registres, telles que 5 et 6, en nombre 2.m pour la totalité de la barrette et chacune à une entrée des informations série e, n sorties de registre en parallèle non référencées dénommées également indifféremment sorties de registre ou sorties en parallèle, et une entrée b de commande d'inhibition des sorties de registre, sont reliées en série m par m et définissent deux registres à décalage 7 et 8, à m.n sorties en parallèle chacun, associées respectivement aux deux réseaux de pistes conductrices les nombres m et n étant tels que le produit 2m.n soit au moins égal au nombre de stylets.

Les sorties en parallèle de chacun des registres à décalage 7 et 8 sont connectées, pour une partie au moins d'entre elles, successives et constituées par des sorties de registre, dites utiles, des m pastilles formant le registre considéré, respectivement aux pistes du réseau associé à ce registre pour l'alimentation simultanée de toutes ces pistes, deux pistes consécutives du réseau étant connectées à deux sorties en parallèle successives du registre concerné quelles que soient les deux pistes considérées. Le produit 2.m.n étant par exemple égal au nombre de stylets, toutes les sorties de registre de toutes les pastilles d'un même registre à décalage sont des sorties utiles, connectées respectivement aux pistes du réseau associé à ce registre. A titre indicatif, pour 1728 points d'image par ligne de balayage de longueur 216 mm, chaque pastille a par exemple $n=32$ sorties de registre (cas illustré) chacun des deux registres à décalage étant alors formé par 27 pastilles. On notera que, dans les cas où le produit m.n est supérieur au nombre des stylets connectés aux pistes du réseau associé à l'un des registres à décalage, ce nombre étant compris entre $(m-1).n$ et $m.n$, les sorties en parallèle successives de ce registre à décalage connectées aux pistes du réseau associé sont constituées par toutes les sorties de registre des $m-1$ premières pastilles et une partie des sorties de registre de la dernière pastille formant ce registre, les dernières sorties de registre de cette dernière pastille étant alors inutilisées.

Chaque pastille à étages registres présente, en outre, une entrée horloge H, deux entrées d'alimentation $V_1$ et $V_2$ fournissant les deux niveaux de tension correspondant aux deux niveaux logiques d'impression, une sortie de données s et une entrée de commande de mise forcée à un étant donné correspondant sur les sorties de registre au niveau logique d'impression n'entraînant pas de modification de coloration du papier électro-sensible; on a considéré par la suite que cet état est l'état zéro et on a appelé RAZ cette dernière entrée. Dans chaque pastille les sorties de registre sont complémentées tandis que qa sortie s, reliée à l'entrée e de la pastille suivante, correspond à la dernière sortie de registre non complémentée. D'une pastille à l'autre formant un même registre à décalage les entrées de même nature, exception faite des entrées d'informations e, soit les entrées de commande de même nature des pastilles, sont respectivement mises en parallèle par des liaisons ou pistes supplémentaires (non référencées) et forment les entrées correspondantes du registre à décalage constitué.

Les sorties de registre successives de chaque pastille sont disposées à la suite les unes des autres sur le pourtour de la pastille, sur une portion entre l'entrée e voisine de la première sortie de registre (c'est-à-dire de la sortie connectée au premier étage de la pastille) et la sortie s voisine de la dernière sortie de registre, les autres entrées de la pastille étant disposées sur l'autre portion de pourtour entre l'entrée e et la sortie s.

En fonctionnement, l'entrée série de la première pastille à étages registres de chaque registre à décalage, qui constitue l'entrée série de ce registre reçoit les informations définissant la couleur, blanche ou noire, des points d'image concernés par les stylets de la rangée associée au registre considéré. Pendant cette opération de chargement des informations, effectuée à un rythme constant H, les sorties des registres sont bloquées au niveau logique d'impression n'entraînant pas de modification de coloration du papier électro-sensible (niveau "1" dans l'exemple considéré ci-avant): il y a simple propagation des informations dans les étages successifs de chaque registre à décalage. Chacun des registres à décalage étant chargé, l'opération d'inscription des points d'image correspondant aux informations contenues dans les deux registres est assurée par déblocage des sorties des registres qui alimentent alors individuellement les stylets.

Selon le niveau logique des informations binaires concernant les points à inscrire par les stylets respectifs, il y aura ou pas modification de coloration du papier électro-sensible aux points de contact entre les stylets et le papier.

Cette opération d'inscription concerne, compte tenu de l'organisation des stylets, les points d'image de rang pair (ou impair) d'une ligne balayée par l'une des rangées de stylets et les points d'image de rang impair (ou pair) d'une autre ligne balayée simultanément par l'autre rangée de stylets, ces deux lignes balayées simultanément par les deux rangées de stylets de la barrette étant séparées l'une de l'autre par une ligne de balayage intermédiaire. L'inscription de la totalité des points d'image d'une ligne de balayage se fera par balayage de cette ligne par l'une et l'autre des deux rangées de stylets, c'est-à-dire au bout d'une avance de deux pas-ligne du papier par rapport à la barrette d'impression.

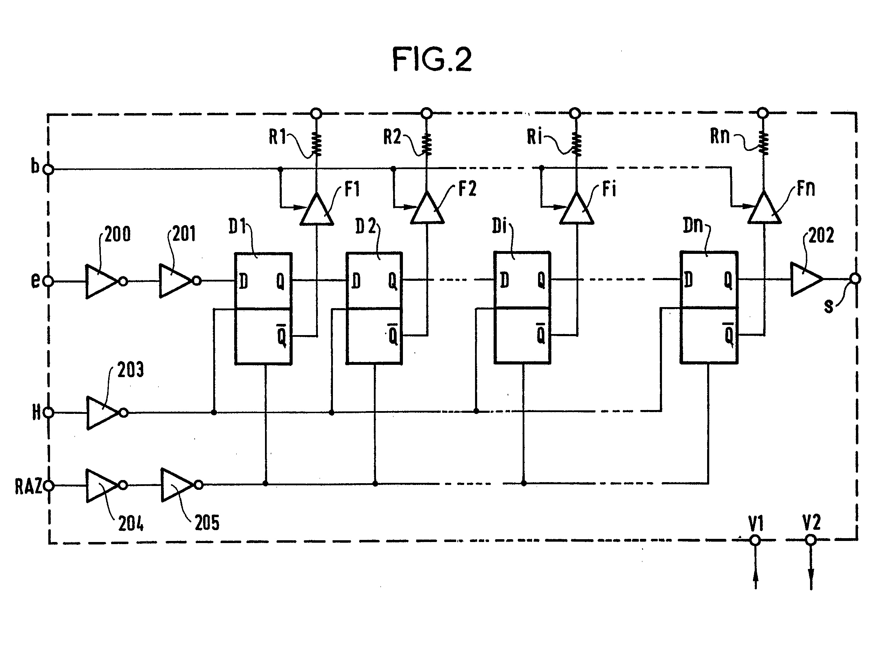

Dans la figure 2, on a représenté un exemple de schéma logique d'une pastille à étages registres telle que 5 ou 6 apparaissant dans la figure 1.

Dans l'exemple illustré figure 2, les n étages de la pastille sont constitués par n bascules de type D, D1 à Dn respectivement, montées en série, la sortie Q de chaque bascule Di ($1 \leqslant i < n$) étant reliée à l'entrée D de la bascule Di+1. L'entrée D de la bascule D1 est reliée à l'entrée e de la pastille à travers deux portes d'interface ("driver" en langage anglo-saxon) inverseuses 200 et 201 connectées en série. La sortie Q de la bascule Dn est reliée à la sortie s de la pastille à travers une porte d'interface non inverseuse 202.

L'entrée horloge H de la pastille est reliée aux entrées horloge respectives des bascules D1 à Dn à travers une porte d'interface inverseuse 203, tandis que l'entrée RAZ de la pastille est reliée aux entrées de commande de remise à zéro respectives de ces bascules à travers deux portes d'interface inverseuses 204 et 205 connectées en série.

Les sorties $\overline{Q}$ respectives des bascules D1 à Dn sont respectivement reliées aux sorties de registre, non référencées, de la pastille à travers des portes d'interface non inverseuses, F1 à Fn respectivement, du type "trois états", ("tri-state" en langage anglo-saxon) comportant chacune une entrée de commande d'inhibition connectée à l'entrée de commande d'inhibition b de la pastille. En outre, des résistances R1 à Rn de protection contre les risque de surintensité sont avantageusement disposées en sortie des portes F1 à Fn respectivement.

Bien entendu, l'alimentation des diverses bascules et portes représentées s'effectue à partir des tensions appliqués sur les entrées d'alimentation $V_1$ et $V_2$ de la pastille; ainsi qu'il est habituel dans les schémas logiques afin de de ne pas surcharger inutilement ces schémas, les connexions correspondantes n'ont pas été illustrées.

Le maintien forcé à zéro des bascules D1 à Dn est commandé par exemple par la présence d'un niveau logique "1" sur l'entré RAZ et le blocage, ici au niveau logique "1", des sorties des portes F1 à Fn par la présence d'un niveau logique "1" sur l'entrée b.

Le schéma logique d'une pastille à étages registres représenté dans la figure 2 est celui d'un registre à décalage, à entrée série des informations et sorties en parallèle, voisin de certains registres à décalage commercialisés sour forme de circuits intégrés, associé à un moyen de blocage de ses sorties en parallèle qui de plus sont protégées contre les risques de surintensité, et muni en outre d'une sortie série des informations. Le fonctionnement de cet ensemble, évident pour l'homme de l'art, ne sera pas, de ce fait, décrit.

On notera que la réalisation des pastilles à étages registres (5 et 6 figure 1), avantageusement en technologie CMOS, s'effectue selon l'un quelconque des procédés classiques de fabrication par diffusion des semi-conducteurs par exemple le procédé "Metal Gate".

Dans les figures suivantes on a illustré plusieurs modes de réalisation d'une barrette d'impression conforme à l'invention et leurs procédés d'obtention; on notera que dans une même figure, les différents éléments représentés ne l'ont toujours été tous à la même échelle, ceci afin de mieux faire apparaître la structure concernée.

A titre d'exemple, on a considéré qu'une ligne de balayage du papier électro-sensible se compose de 1728 points d'image régulièrement répartis sur 216 mm, soit 8 points d'image au millimètre, avec un pas entre points d'image consécutifs de 125 $\mu$m. On a aussi considéré que le pas d'avance du papier par rapport à la barrette d'impression, ou pas entre lignes de balayage consécutives, est de 260 $\mu$m.

Chaque barrette d'impression comporte donc 1728 stylets pour l'inscription des 1728 points d'image par ligne de balayage, les dimensions de chaque point d'image inscrit étant de 125 $\mu$m x 260 $\mu$m.

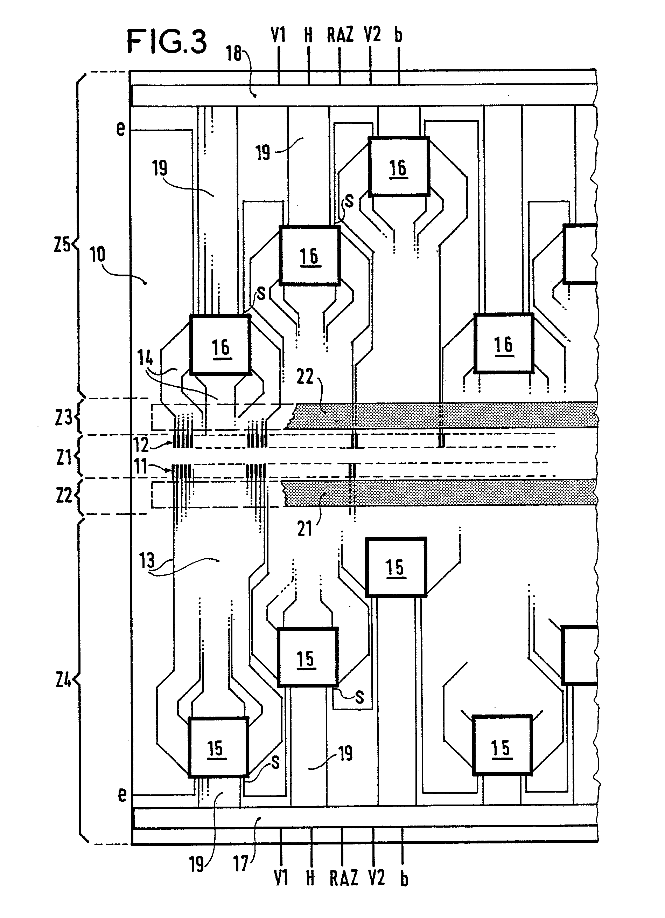

Dans la figure 3, on a illustré schématiquement un premier mode de réalisation d'une barrette d'impression dite monobloc.

Elle est constituée par un support isolant 10, par exemple un support d'epoxy dont une face porte les éléments définissant le circuit électrique de la figure 1. A cet effet la face concernée du support est divisée en plusieurs zones: une première zone $Z_1$, ici la zone longitudinale médiane qui est dite la zone des stylets, deux deuxièmes zones $Z_2$, $Z_3$, de part et d'autre de la zone des stylets et adjacentes à celle-ci, dites zones de connexion, et deux troisièmes zones $Z_4$, $Z_5$, au delà de chacune des zones de connexion, dites zones de commande.

Le support 10 porte deux réseaux de pistes conductrices telles que 13 et 14, par exemple des pistes de cuivre, formées sur la face concernée du support. Les pistes conductrices des deux réseaux occupent les zones de connexion $Z_2$ et $Z_3$ respectivement et s'étendent en ce qui concerne chaque réseau sur la partie adjacente de la zone des stylets $Z_1$ et sur la zone de commande adjacente $Z_4$ ou $Z_5$.

Sur la zone des stylets $Z_1$, les parties terminales des pistes définissent les emplacements des stylets: elles font chacune sensiblement les dimensions voulues des stylets, 125 $\mu$m x 260 $\mu$m, sont dans chaque réseau disposées au pas de 250 $\mu$m et, d'un réseau à l'autre, sont positionées avec un décalage d'un demi-pas, soit de 125 $\mu$m, en maintenant, entre les deux réseaux, une ligne d'isolement de 260 $\mu$m.

Chacune des parties terminales des pistes est recouverte, par dépôt électrolytique, d'un matériau conducteur électrique et résistant à l'abrasion mécanique, constituant chacun des stylets tels que 11 et 12 sans contact entre eux pour leur isolation électrique. Deux bandes isolantes 21 et 22 disposées de part et d'autre de la zone des stylets sur les pistes conductrices assurent l'isolement des pistes et du papier électro-sensible lorsque celui-ci sera balayé par la barrette. Sur chacune des zones de commande $Z_4$ et $Z_5$ les parties terminales des pistes du réseau correspondant aboutissent à des emplacements réservés aux pastilles à étages registres mentionnées en regard de la figure 1, en nombre m pour chaque zone de commande. Sur chacune des zones de commande $Z_4$ et $Z_5$, ces parties terminales sont associées à des pistes conductrices supplémentaires telles que 19 et forment m ensembles pour les m pastilles à étages registres respectivement; dans chaque ensemble, les pistes sont positionnées entre elles de manière adaptée aux liaisons à effectuer sur les entrées et sorties de la pastille à étages registres correspondante. Ces parties terminales de chaque ensemble sont respectivement reliées aux sorties de registres d'une pastille à étages registres, telle que 15 ou 16, positionnée et montée sur le support 10 à l'emplacement qui lui est réservé selon un procédé de montage automatique, avantageusement le procédé TAB (Transport Automatique sur Bande ou Tape Automated Bonding) tandis que les pistes supplémentaires telles qu 19 associées sont reliées aux entrées et à la sortie s de cette pastille. Le support 10 porte, en outre, sur les deux zones de commande $Z_4$ et $Z_5$, au voisinage de ses deux bords longitudinaux, deux bandes conductrices multicouches 17 et 18 respectivement, dont les couches conductrices de chacune, isolées les unes des autres, assurent les mises en parallèle respectives des entrées de commande d'inhibition b, des entrées alimentation $V_1$ et $V_2$, des entrées de remise à zéro RAZ et des entrées horloge H des différentes pastilles de la zone de commande concernée. Sur chaque zone de commande les pistes supplémentaires telles que 19 assurent la mise en série des différentes pastilles ainsi que le raccordement des entrées b, $V_1$, $V_2$, RAZ et H à la bande conductrice correspondante 17 ou 18 portant les entrées correspondantes, référencées identiquement, du registre à décalage formé et le raccordement de l'entrée e de la première pastille à l'entrée série des informations, référencée identiquement, de ce registre à décalage.

On notera aussi, en regard de la figure 3, que les pastilles à étages registres successives d'une même zone de commande sont disposées longitudinalement sur plusieurs rangées (ici trois) pour bénéficier d'un emplacement maximal; dans chaque zone de commande, les parties terminales des pistes ont été resserrées pour obtenir cet emplacement maximal.

Pour obtenir une barrette monobloc, telle que celle illustrée dans la figure 3, les pistes de cuivre sont obtenues initialement par gravure chimique d'une bande de cuivre laminé collée sur le support, dans le cas présent compte-tenu du pas entre pistes, selon une technique classiquement employée pour la réalisation des circuits imprimés utilisant le matériau photorésistant connu sous la marque Riston. Lors de la gravure chimique les pistes sont prévues pour recevoir, en ce qui concerne certaines d'entre elles, les stylets et pour définir les emplacements affectés aux pastilles à étages registres formant les deux registres à décalage. L'obtention des stylets sur les parties terminales des pistes dans la zone $Z_1$ se fait par collage sur cette zone des stylets d'une feuille de Riston, formation de fenêtres de 125 $\mu$m×260 $\mu$m dans la feuille de Riston sur les parties terminales des pistes aux endroits des stylets, puis dépôt électrolytique sur les pistes de cuivre d'un matériau conducteur et résistant à l'abrasion dans les fenêtres. On effectue, par exemple, un premier dépôt de nickel de 400 Vickers sur le cuivre puis un deuxième dépôt de chrome de 1000 Vickers sur le nickel. On notera que, dans le cas où le papier électro-sensible utilisé est d'un type nécessitant des stylets contenant de l'argent, on déposera dans les fenêtres de la feuille de Riston un alliage d'argent. On obtient ainsi des stylets parallélépipédiques dans la limite de l'épaisseur des fenêtres. On procède ensuite au dépôt de laque isolante ou d'une bande isolante ou d'une bande isolante auto-collante (par exemple en matériau connu sous la marque Teflon) sur les pistes conductrices le long de chaque bord longitudinal de la zone des stylets sur une largeur de l'ordre du millimètre; les deux bandes isolantes ainsi formées, 21 et 22, évitent un éventuel contact entre les pistes conductrices et le papier électrosensible au cours de son impression.

L'obtention des parties de commande de la barrette se fait per étamage des emplacements des pastilles respectives puis par report des pastilles sur le support suivant le procédé TAB connu, c'est-à-dire montage initial des pastilles sur une bande puis transfert des pastilles sur le support de la barrette.

Les connexions des entrées b, $V_1$, $V_2$, RAZ et H de chacune des pastilles, sur les bornes d'entrées correspondantes du registre formé, sont enfin obtenues par report de la bande conductrice à cinq couches conductrices isolées, sur chaque bord longitudinal du support de la barrette.

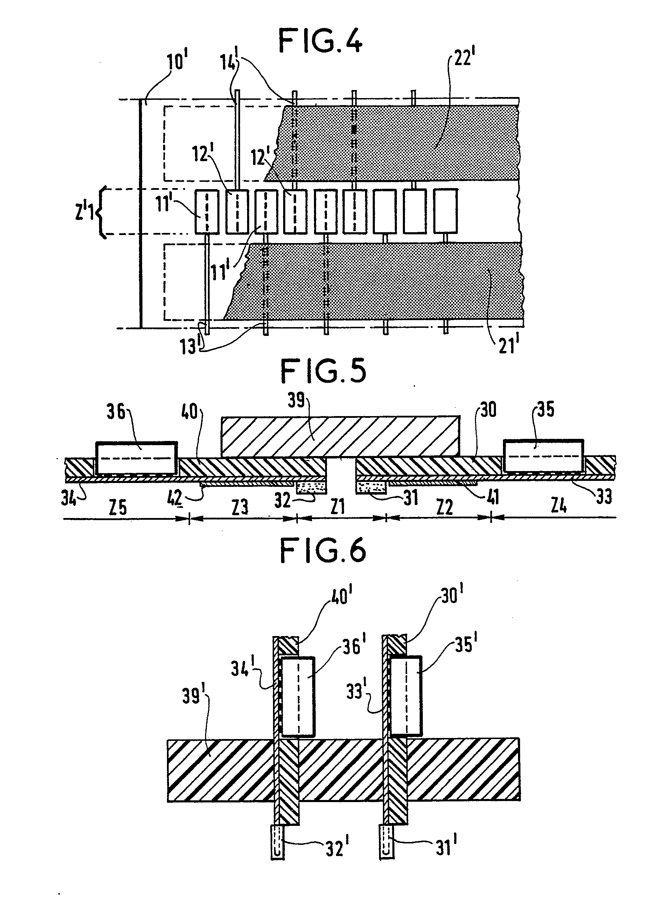

Dans la figure 4, on a illustré une variante en ce qui concerne la zone des stylets et les parties adjacentes des zones de connexion de la barrette monobloc selon la figure 3. Dans cette figure 4, les références utilisées dans la figure 3 ont été conservées pour désigner les éléments correspondants elles sont simplement accompagnées de l'accent " ' " (prime). La zone des stylets $Z'_1$, sur le support 10', comprend toujours 1728 stylets tels que 11' et 12' mais ceux-ci, de dimensions, sensiblement 90 $\mu$m×260 $\mu$m en ce qui concerne la surface destinée à être en contact avec le papier, sont organisés en une seule ligne au pas de 125 $\mu$m. Les pistes conductrices 13' et 14' toujours disposées en deux réseaux de part et d'autre de la seule ligne des stylets ont leurs parties terminales respectives portant les stylets intercalées les unes entre les autres: les parties terminales d'un réseau sont intercalées entre les parties terminales de l'autre réseau sur la zone des stylets. Sur la zone des stylets, les parties terminales des pistes se trouvent donc au pas de 125 $\mu$m.

L'obtention des pistes conductrices sur le support 10' et se trouvant dans la zone des stylets au pas des 1728 stylets alignés est assurée par gravure chimique d'une bande de cuivre laminé collée sur le support selon des techniques moins courantes que celle employant du Riston, mais cependant connues, utilisant des laques photosensibles: les pistes gravées font sensiblement 40 $\mu$m de largeur sur 9 $\mu$m d'épaisseur. L'obtention des stylets sur les parties terminales des pistes se fait par dépôt électrolytique de matériau conducteur et résistant à l'abrasion (Nickel ou éventuellement alliage d'argent) sur les parties terminales des pistes conductrices, à travers une fenêtre unique faite, sur la longueur de la zone des stylets (216 mm) et sur sa largeur (260 $\mu$m), dans une feuille de Riston déposée sur le support gravé. L'épaisseur de ce dépôt électrolytique sur les parties terminales des pistes est limitée, elle est sensiblement de 20 $\mu$m, pour éviter les possibilités de court-circuit entre ces parties terminales adjacentes. On procède ensuite au dépôt de laque isolante ou d'une bande isolante auto-collante 21' ou 22' (par exemple en matériau connu sous la marque Téflon) le long de chaque bord longitudinal de la ligne de stylets sur une largeur de l'ordre du millimètre. Ces bandes d'isolement formées 21' et 22' garantissent un isolement entre pistes conductrices et le papier électro-sensible avec lequel les stylets seront en contact lors de son impression.

Dans la figure 5, on a illustré un autre mode de réalisation d'une barrette d'impression, de type monobloc, selon l'invention vue en coupe schématisée. La barrette comporte ici deux films 30 et 40 portant chacun un réseau de pistes conductrices telles que 33 ou 34 (les réseaux de pistes non visibles ici étant analogues à ceux illustrés dans la figure 1 ou 3) dont une extrémité de chacune porte un stylet tel que 31 ou 32 Sur chaque film, une bande isolante 41 ou 42 selon le film 30 ou 40 considéré est disposée sur les pistes conductrices le long de la rangée de stylets, pour éviter un éventuel contact entre les pistes conductrices et le papier électro-sensible au cours de son impression. Chaque film porte également m pastilles à étages registres telles que 35 ou 36 dont les entrées et sorties (non visibles ici mais analogues à celles des figures 1 et 3) sont respectivement soudées en ce qui concerne les sorties de registre sur les parties terminales des pistes desdits réseaux au voisinage des autres extrémités respectives de ce pistes et en ce qui concerne les autres accès, sur des pistes supplémentaires (non visibles ici mais analogues aux pistes supplémentaires 19 illustrés dans la figure 3). Ces deux films 30 et 40 équipés de façon symétrique sont montés tête-bêche sur un support 39 sur lequel ils sont fixés par collage, de manière que les stylets forment deux rangées séparées par un intervalle d'isolement de largeur égale à la largeur de chacune des lignes des stylets, les stylets de l'une des rangées faisant face à l'intervalle entre stylets de l'autre rangée. Dans cette figure 5, on a référencé par $Z_1$ la zone des stylets définie par les deux bords en regard des films et l'intervalle qui les sépare, par $Z_4$ et $Z_5$ les zones de commande formées par les pastilles à étages registres mises en série sur chacun des films et par $Z_2$ et $Z_3$ les zones de connexion occupées par les pistes des deux réseaux portés par les deux films respectivement et s'étendant entre la zone des stylets $Z_1$ et les deux zones de commande $Z_4$ et $Z_5$ respectivement.

L'obtention de cette barrette est assurée comme suit. On définit sur un film, à partir duquel seront prélevés les deux films 30 et 40, des emplacements pour les pastilles à étages registres, sur un rang. On forme sur ce film de départ, par gravure chimique d'une bande de cuivre laminé collée sur celui-ci, des ensembles de pistes juxtaposés; fans chaque ensemble, les pistes partent d'un emplacement affecté à une pastille à étages registres et sont ramenées pour une partie ou un premier groupe, correspondant aux sorties de registre de la pastille à monter, d'un même côté du film le long duquel elles sont régulièrement réparties, dans un même ensemble de pistes et d'un ensemble de pistes à l'autre, au pas souhaité (250 $\mu$m) des stylets d'une même rangée de la barrette; l'autre partie ou deuxième groupe des pistes correspondant aux autres accès de la pastille à monter est ramenée de l'autre côté du film, la dernière piste étant reliée à la première piste du deuxième groupe de pistes de l'ensemble de pistes adjacent suivant. Sur les extrémités régulièrement réparties le long du bord du film, on forme les stylets, par dépôt électrolytique du matériau des stylets et l'on procède ensuite au dépôt d'une bande isolante le long de la ligne des stylets selon les opérations mentionnées ci-avant en regard de la barrette selon la figure 3.

On vient ensuite monter les pastilles à étages registres sur le film, aux emplacements qui leur sont affectés, en assurant la soudure des différentes sorties et entrées de chaque pastille sur les pistes correspondantes, ceci selon la phsae dite de transfert sur ruban, ou phase ILB (dénommée en anglais Inner Lead Bonding, ILB) du procédé TAB.

On notera que l'organisation des ensembles de pistes et le montage des pastilles s'effectuant de façon que soient formés, juxtaposés sur le film, deux équipements symétriques. Le film, découpé au niveau des extrémités des pistes de connexion, est ensuite découpé pour réaliser les deux films 30 et 40 portant chacun le registre à décalage souhaité et sur chacun desquels est en outre reportée au voisinage du bord où sont ramenés les pistes des deuxièmes groupes ou pistes supplémentaires une bande conductrice multicouche analogue à celles mentionnées en regard de la figure 3 et assurant les mises en parallèle respectives des entrées de même nature, exception faite des entrées informations série, des pastilles portées par le film considéré. Ces deux, films sont alors positionnés tête-bêche et montés par collage sur le support 39.

En variante, non illustrée car se déduisant aisément de la figure 5, la barrette d'impression peut ne comporter qu'un seul et unique film au lieu et en substitution des films 30 et 40. Dans ce cas, le film unique choisi de largeur sensiblement double de celle du film 30 ou 40 est équipé de façon à constituer deux parties sensiblement symétriques l'une de l'autre (à un décalage longitudinal près) par rapport à l'axe longitudinal médian de ce film unique et comportant des équipements analogues à ceux des films 30 et 40 respectivement.

A cet effet, on grave une bande de cuivre laminé collée sur ledit film unique de manière à prévoir les emplacements des pastilles à étages registres sur deux rangs au voisinage des deux bords longitudinaux du film, respectivement, et à constituer les pistes conductrices des deux réseaux et les pistes conductrices supplémentaires associées, ces pistes, partant des emplacements respectifs et formant deux suites d'ensembles juxtaposés occupant sensiblement l'une et l'autre moitié de ce film unique, respectivement. Dans chaque ensemble de pistes, les pistes partent d'un emplacement affecté à une pastille et sont ramenées, pour une partie ou premier groupe de pistes correspondant aux sorties de registres de la pastille à monter, au voisinage de la ligne médiane du film où les extrémités des pistes de ce premiers groupes qui constituent sur l'une et l'autre moitié du film lesdits deux réseaux respectivement sont régulièrement réparties au pas souhaité des stylets, l'autre partie ou deuxième groupe de pistes correspondant aux autres accès de la pastille à monter, est ramenée au voisinage du bord longitudinal concerné du film, la dernière piste étant reliée à la première piste du deuxième groupe de pistes de l'ensemble de piste adjacent suivant.

Lors de cette opération de gravure qui s'effectue selon la technique indiquée en regard de la figure 3, on prévoit un écart correspondant à une ligne de balayage (260 $\mu$m) entre les extrémités régulièrement réparties, au voisinage de la ligne médiane du film, des pistes des deux réseaux ainsi qu'un décalage entre pistes d'un réseau à l'autre formées sur les deux moitiés du film respectivement, lesdites extrémités des pistes d'un réseau étant situées en regard des intervalles entre lesdites extrémités des pistes de l'autre réseau, respectivement. Le montage des pastilles avec soudure de leurs sorties et entrées sur les pistes est alors effectué par mise en oeuvre de la phase dite ILB du procédé TAB. On réalise ensuite les stylets puis on procède au dépôt d'une bande isolante de part et d'autre de l'ensemble des deux rangées de stylets et au report d'une bande conductrice multicouche au voisinage de chaque bord longitudinal du film, ainsi qu'indiqué ci-avant en regard de la figure 3, pour obtenir après une découpe finale du film le circuit désiré et son association à un support de maintien. On notera, qu'en variante, on ne formera sur le film unique qu'une seule rangée de stylets, au voisinage de la ligne médiane du film, les extrémités des pistes d'un réseau étant alors positionnées dans les intervalles entre les extrémités des pistes de l'autre réseau au voisinage de cette ligne médiane. Les opérations de formation des pistes et des stylets s'effectuent dans ce cas selon les techniques indiquées ci-avant en regard de la figure 4.

On a encore dans la figure 6 illustré une autre variante de réalisation d'une barrette monobloc selon l'invention, dans cette réalisation, à rapprocher de la réalisation selon la figure 5, les éléments comparables à ceux de la figure 5 portent les références précédentes accompagnées du signe prime. La barrette selon la figure 6 se compose aussi de deux films $30'$ et $40'$ portant chacun un réseau de pistes conductrices $33'$ ou $34'$, dont des premières extrémités débordent sur un premier bord longitudinal du film qui porte ces pistes. Ces premières extrémités de pistes portent des stylets $31'$ ou $32'$. Les films $30'$ et $40'$ portent également des pastilles à étages registres $35'$ et $36'$, en nombre m pour chaque film dont les sorties de registre sont respectivement soudées sur les secondes extrémités des pistes des réseaux et dont les autres accès sont respectivement soudés à des pistes supplémentaires non visibles ici mais analogues aux pistes illustrées dans la figure 3. Ces deux films $30'$ et $40'$ équipés identiquement sont montés, parallèlement l'un à l'autre c'est-à-dire pratiquement superposés l'un sur l'autre, sur un ensemble mécanique de support $39'$ auquel ils sont collés, de manière à définir deux rangées de stylets débordant des films et de l'ensemble support $39'$ d'un même côté et deux rangées de pastilles à étages registres de l'autre côté du support $39'$. Les stylets d'une même rangée sont également situés en regard des intervalles entre stylets de l'autre rangée.

Pour l'obtention d'une barrette selon la figure 6, on prend un film, de làrgeur proche de la hauteur définitive de la barrette définitive, sur lequel on colle une bande de cuivre laminé, d'épaisseur de $35 \mu m$ environ, en la faisant dépasser sur tout un des bords longitudinaux. On réalise les pistes de cuivre des deux réseaux qui se terminent en porte-à-faux sur tout ce bord longitudinal, et les pistes supplémentaires qui sont ramenées vers l'autre bord longitudinal et on procède ensuite au montage des pastilles avec soudure de leurs sorties et entrées sur les pistes, ceci selon la phase dite ILB du procédé TAB, puis enfin on constitue les stylets sur les extrémités en porte-à-faux des pistes. Ce film est découpé pour constituer les deux films $30'$ et $40'$ sur chacun desquels est en outre reportée une bande conductrice multicouche (analogue à celles mentionnées précédemment) au voisinage du bord où sont ramenées les pistes supplémentaires. Les deux films $30'$

et $40'$ sont ensuite disposés parallèlement l'un à l'autre, les deux plans des films étant distants l'un de l'autre d'environ $420 \mu m$, et collés, avec un décalage l'un par rapport à l'autre d'un demi-pas des stylets, sur l'ensemble de support qui les maintient associés. Dans cette réalisation, on notera que c'est la partie frontale de chaque stylet qui va balayer le papier électrosensible lors de son impression, cette partie frontale, de surface définie par l'épaisseur du dépôt électrolytique du matériau des stylets et la largeur de la fenêtre à travers laquelle est réalisé ce dépôt, c'est-à-dire d'environ $60 \mu m$ sur $125 \mu m$, assurera l'inscription d'un point au cours de l'avance du papier: une ligne de $260 \mu m$ de hauteur sera faite en un peu moins de $20$ ms.

On notera en outre que, dans cette réalisation, ce sont les points de rangs pairs et ceux de rangs impairs de deux lignes de balayage successives respectivement qui sont inscrits simultanément par les stylets.

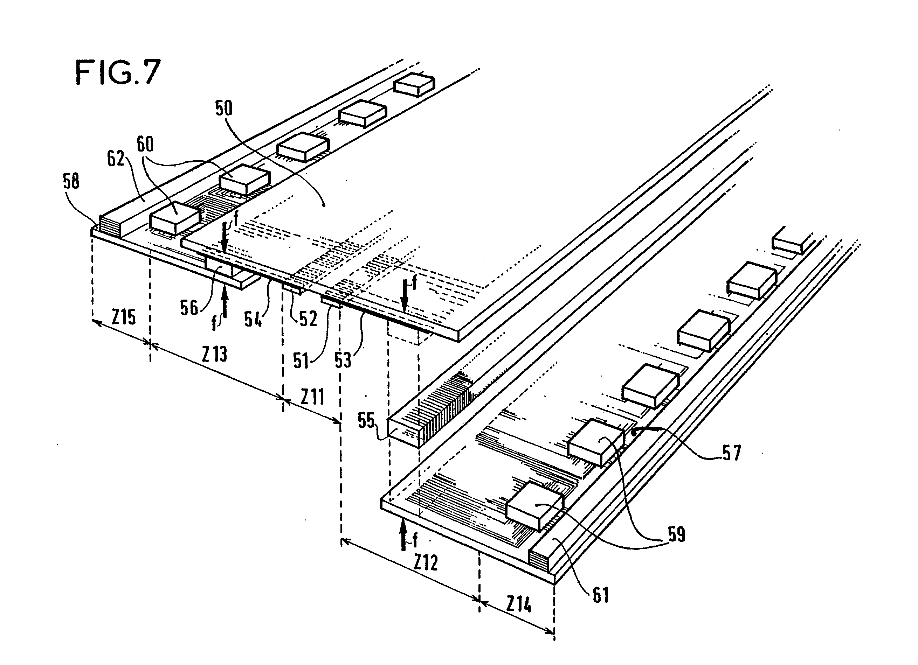

Dans la figure 7, on a illustré schématiquement une autre réalisation de la barrette d'impression selon l'invention, dans laquelle les stylets soumis à l'usure, peuvent être changés indépendamment des deux registres à décalage formés par les pastilles à étages registres que comporte selon l'invention la barrette.

Cette barrette comprend toujours une zone de stylets, ci $Z_{11}$ deux zones de connexion $Z_{12}$ et $Z_{13}$ et deux zones de commande $Z_{14}$ et $Z_{15}$. La zone de stylets $Z_{11}$ comporte toujours $1728$ stylets tels qu $51$ et $52$, ici organisés en deux rangées ou lignes séparées par une ligne d'isolement, portés par des premières extrémités de pistes conductrices telles que $53$ et $54$ qui sont elles-mêmes portées par un support $50$ sur lequel elles forment deux réseaux. Lesdites premières extrémités des pistes des deux réseaux, partant des stylets, s'étendent, à pas régulier pour chaque réseau, dans une première zone longitudinale du support $50$, ici sensiblement médiane qui constitue ainsi ladite zone de stylets $Z_{11}$, tandis que les secondes extrémités des pistes de ces deux réseaux s'étendent, également à pas régulier pour chaque réseau, dans deux secondes zones longitudinales (non référencées) du support $50$, respectivement, situées de part et d'autre de la zone des stylets, au voisinage des bords longitudinaux du support $50$. Ainsi qu'illustré dans la figure 7, les pistes des deux réseaux sont avantageusement rectilignes et parallèles unes aux autres.

Chacune des zones de commande $Z_{14}$ et $Z_{15}$ est définie sur un film, $57$ ou $58$, selon la zone $Z_{14}$ ou $Z_{15}$ considérée, portant m pastilles à étages registres telles que $59$ ou $60$ montées en série pour constituer un registre à décalage. Sur chaque film $57$ ou $58$ les sorties de registre des pastilles à étages registres sont ramenées à pas régulier identique au pas des deuxièmes extrémités des pistes (c'est-à-dire ici au pas des pistes) de l'un ou l'autre réseau, sensiblement le long d'un même borde longitudinal du film qui porte ces pastilles, tandis que les entrées et la sortie s de chaque pastille sont ramenées vers l'autre bord du film, au voisinage duquel est réalisée la mise en série des pastilles et est disposée une bande conductrice multicouche, 61 ou 62 selon le film 57 ou 58 considéré, dont les couches conductrices isolées les unes des autres assurent les mises en parallèle respectives des entrées de même nature, exception faite des entrées informations série e, des diverses pastilles. Les zones de commande $Z_{14}$ et $Z_{15}$ sont constituées par les zones respectives des films 57 et 58 occupées par les pastilles et leurs interconnexions.

Chacune des zones de connexion $Z_{12}$ et $Z_{13}$ comporte une bande 55 ou 56 en un élastomère à zones conductrices type "Zebra" ou type "anisotrope" telle que les bandes d'interconnexion connues sous lar marque "CHONECTOR" de la société CHOMERICS. Ces deux bandes 55 et 56 sont prises en sandwich entre le support 50 et les films 57 et 58 respectivement, au niveau des deuxièmes extrémités des pistes du support et des sorties de registre des pastilles ramenées sur chaque film le long d'un même bord longitudinal. La bande d'interconnexion 55, 56 respectivement, forme, avec la zone du support 50 adjacent à la zone des stylets $Z_{11}$ et portant, à l'exception de leurs premières extrémités, les pistes 53 ou 54 dont les secondes extrémités sont en contact avec cette bande, et la zone du film 57, 58 respectivement, adjacente à la zone de commande définie sur ce film, et portant les sorties de registre des pastilles en contact avec cette bande, la zone de connexion $Z_{12}$, $Z_{13}$ respectivement. On notera que les films 57 et 58, ici positionnées tête-bêche, sont équipés de façon symétrique.

En variante non illustrée, mais se déduisant aisément de la figure 7 et de la variante donnée figure 4, dans la zone des stylets formée sur un support analogue au support 50 et portant des pistes analogues aux pistes 53 et 54 disposées en deux réseaux, les parties terminales des pistes portant les stylets viennent s'intercaler les unes entre les autres de sorte que les stylets sont disposés en une seule ligne ou rangée.

L'obtention d'une telle barrette, à zone des stylets $Z_{11}$ interchangeable indépendamment des zones de commande se fait comme suit. La zone des stylets $Z_{11}$ et les parties qui lui sont solidaires des zones de connexion $Z_{12}$ et $Z_{13}$ sont obtenues par gravure chimique d'une bande de cuivre laminé collée sur le support 50 pour la formation des pistes conductrices telles que 53 et 54 puis par dépôt électrolytique de matériau conducteur et résistant à l'abrasion mécanique sur les premières extrémités des pistes pour la formation des stylets, ces opérations sont analogues à celles indiquées ci-avant pour l'obtention des pistes et des stylets de la barrette monobloc selon la figure 3 ou selon la variante de la figure 4 et incluent l'isolement par laque ou bande auto-collante (non représentée dans la figure) déposée de part et d'autre de la zone des stylets en recouvrant les pistes de l'un et l'autre réseaux sur des portions adjacentes à la zone des stylets (à l'exclusion bien entendu des secondes extrémités de ces pistes) évitant un éventuel contact entre les pistes et la papier électro-sensible au cours de son balayge.

Les zones de commande $Z_{14}$ et $Z_{15}$ et les parties qui leur sont respectivement solidaires des zones de connexion $Z_{12}$ et $Z_{13}$ sont obtenues par utilisation directe du film sur lequel sont montées les pastilles à étages registres selon la phase ILB du procédé TAB qui n'est mis en oeuvre que partiellement, la phase de transfert des pastilles du film au support 50 n'existant pas ici. Sur ce film qui est donc utilisé ici comme support définitif les sorties de registre des pastilles d'un même registre sont ramenées d'un même côté et mises au pas des extrémités des pistes conductrices avec lesquelles elles seront respectivement connectées par des pistes supplémentaires (non référencées) préalablement formées sur le film, les entrées et les sorties respectives des diverses pastilles étant ramenées de l'autre côté où est réalisée la mise en série des pastilles, également par des pistes supplémentaires (non référencées) préalablement formées sur le film. Ce film est donc simplement coupé à la longueur convenable pour obtenir les deux films 57 et 58 portant respectivement les deux registres à décalage souhaités, et sur chacun desquels est en outre reportée la bande multicouche 61 ou 62 assurant les mises en parallèle respectives des entrées concernées des pastilles. Concernant chaque film 57 ou 58, on notera que, dans la figure 7, on a représenté sur une même face du film les pastilles à étages registres et leurs entrées et sorties ramenées vers les bords du film, afin de montrer plus clairement ces éléments; en pratique toutefois, les pastilles, montées selon la phase ILB du procédé TAB, apparaîtront sur la face du film autre que celle portant leurs entrées et sorties ramenées vers les bords du film.

Les bandes d'interconnexion 55 et 56 de type connu, sont ensuite simplement montées en sandwich entre le support 50 et le film 57 et 58, respectivement c'est-à-dire entre les extrémités des pistes du support 50 et les sorties de registre des pastilles à connecter respectivement. On utilise, ainsi que schématisé sur la; figure 7 par des flèches f, un petit système mécanique maintenant par pression un bon contact mécanique entre le support 50, la bande d'interconnexion 55 ou 56, et le film des pastilles 59 ou 60 concerné. Bien entendu, lors du montage de chacune des bandes d'interconnexion 55 ou 56, on s'assurera d'un positionnement correct du film des pastilles 59 ou 60 de sorte qu'à chaque sortie de registre corresponde une extrémité de piste, leur connexion se faisant alors à travers la bande d'interconnexion indépendamment des autres sorties de registres et des extrémités des autres pistes.

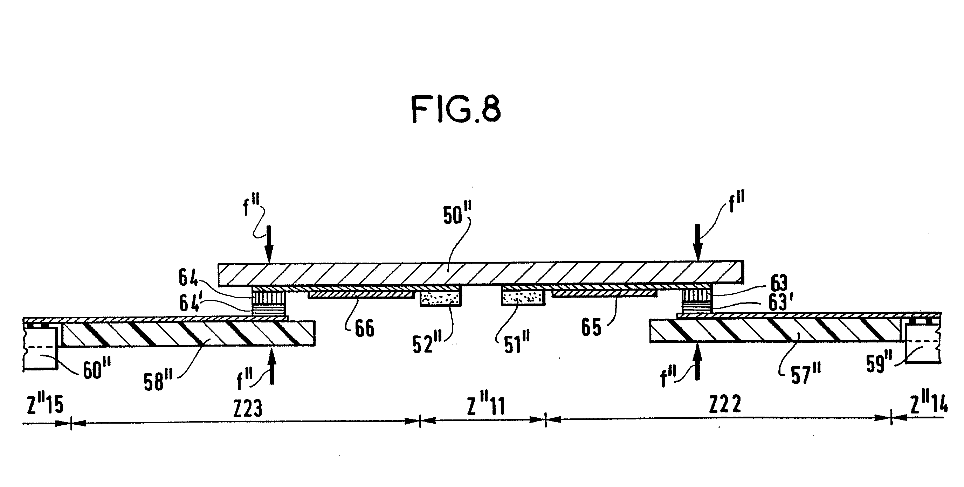

Dans la figure 8, on a illustré, vue en coupe, une variante en ce qui concerne les zones de connexion de la barrette selon la figure 7. Dans cette figure 8, les références utilisées pour la figure 7 ont été reprises accompagnées du symbole '' (seconde), pour désigner les éléments analogues. Les deux zones de connexion, référencées ici $Z_{22}$ et $Z_{23}$, sont également définies à la fois sur le support 50'' où, adjacentes à la zone des stylets $Z''_{11}$, elles portant respectivement les pistes conductrices telles que 53'' et 54'' les deux réseaux à l'exception de leurs premières extrémités qui, portant les stylets tels que 51'' et 52'', s'étendent dans la zone $S''_{11}$, et sur les deux films 57'' et 58'' respectivement où chacune, adjacente à la zone de commande $Z''_{14}$ ou $Z''_{15}$ définie sur le film 57'' ou 58'' concerné, porte les sorties de registre des pastilles à étages registres telles que 59'' ou 60'' de la zone de commande définie sur ledit film concerné, ramenées au voisinage d'un même bord de ce film.

Dans chacune des zones de connexion $Z_{22}$ et $Z_{23}$, les secondes extrémités des pistes du réseau, à pas régulier, sont recouvertes chacune d'un matériau conducteur électrique, par exemple d'or ou de palladium, formant sur chacune d'elles un plot de contact tel que 63 ou 64; les sorties de registre ramenées au pas desdites deuxièmes extrémités sont également recouvertes chacune, au voisinage du bord longitudinal correspondant du film concerné, de ce même matériau formant sur chacune d'elles un plot de contact tel que 63' ou 64'. Dans chaque zone de connexion $Z_{22}$ ou $Z_{23}$, les plots tels que 63 ou 64 portés par les pistes, alignés sur une rangée, et les plots tels que 63' ou 64' portés par les sorties de registre, également alignés sur une rangée, sont respectivement en contact les uns avec les autres et assurent les interconnexions respectives de ces pistes et ces sorties de registre.

Dans la figure 8, on a encore représenté, référencées par 65 et 66, les deux bandes isolantes déposées de part et d'autre de la zone des stylets le long de ses bords longitudinaux pour éviter un éventuel contact entre les pistes et le papier électro-sensible lors de son balayage.

Dans la barrette représentée figure 8, les stylets sont organisés en deux rangées comme dans la barrette représentée figure 7; en variante, les stylets seront organisés sur une seule rangée comme dans la variante donnée ci-avant et non illustrée de la barrette représentée figure 7.

La constitution, sur le support 50'', de la zone des stylets $Z''_{11}$ et des parties qui lui sont solidaires des zones de connexion $Z_{22}$ et $Z_{23}$ de la barrette selon la figure 8 (ou de sa variante concernant la zone des stylets) s'effectue en procédant comme pour la constitution sur le support 50 de la zone des stylets $Z_{11}$ et des parties qui lui sont solidaires des zones de connexion $Z_{12}$ et $Z_{13}$ de la barrette selon la figure 7 (ou de sa variante concernant la zone des stylets) et en procédant en outre à la formation des plots de contact tels que 63 et 64 sur les deuxièmes extrémités des pistes conductrices préalablement formées sur le support 50''. L'obtention des deux zones de commande $Z''_{14}$ et $Z''_{15}$ et des parties qui leur sont respectivement solidaires des deux zones de connexion $Z_{22}$ et $Z_{23}$ de la barrette selon la figure 8 s'effectue en procédant comme pour l'obtention des deux zones de commande $Z_{14}$ et $Z_{15}$ et des parties qui leur sont respectivement solidaires des deux zones de connexion $Z_{12}$ et $Z_{13}$ de la barrette selon la figure 7 et en procédant en outre à la formation des plots de contact tels que 63' et 64' sur les sorties de registre des pastilles à étages registres ramenées aux pas des extrémités des pistes avec lesquelles elles seront respectivement connectées.

La formation des plots de contact tels que 63, 64, 63' et 64' s'effectue par collage d'une feuille de Riston sur chacune des deux zones du support 50'' où s'étendent lesdites secondes extrémités des pistes des deux réseaux respectivement, ainsi que sur chacun des deux films 57'' et 58'' au voisinage du bord longitudinal vers lequel sont ramenées les sorties de registre des pastilles, formation de fenêtres dans chaque feuille de Riston aux emplacements des plots et dépôt électrolytique dans les fenêtres du matériau choisi pour ces plots (par exemple dépôt d'or ou de palladium).

On amène ensuite en contact les deux rangées de plots portés par les pistes du support avec les deux rangées de plots portés par les deux films, respectivement, en s'assurant que chaque plot porté par une sortie de registre soit en regard avec le plot adéquat porté par une piste. On utilise, ainsi que schématisé sur la figure 8 par des flèches f'', un petit système mécanique pour maintenir les contacts entre plots.

On notera, concernant les divers modes de réalisation de la barrette selon l'invention décrits précédemment, qu'il peut être plus avantageux dans certaines réalisations pratiques de ne pas mettre de bandes conductrices multicouches sur le ou les substrats portant les pastilles à étages registres et d'assurer les mises en parallèle respectives des entrées b, $V_1$, $V_2$, RAZ et H (figure 1) des pastilles formant un même registre à décalage par des pistes formées sur la face du substrat portant ces pastilles autre que celle sur laquelle sont rapportées ces entrées et reliées respectivement aux entrées concernées des pastilles par des trous métallisés formés à cet effet dans le substrat, ou bien encore, notamment pour des raisons d'encombrement du substrat, d'assurer ces mises en parallèle à l'extérieur de celui-ci, les entrées concernées des pastilles rapportées sur le substrat au voisinage d'un même born longitudinal de ce substrat étant alors par exemple étamées pour permettre un raccordement extérieur par refusion d'étain.

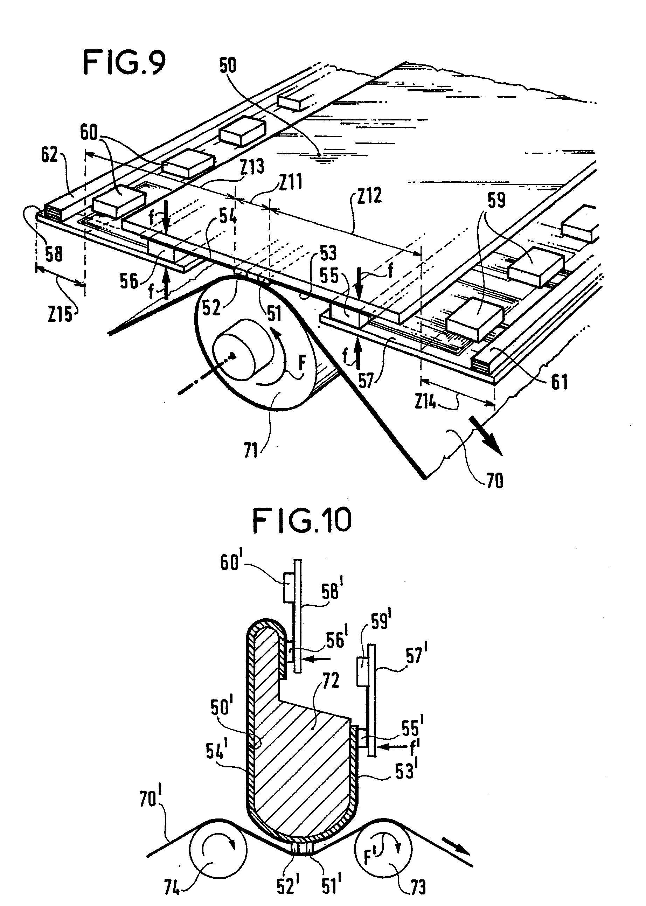

Dans la figure 9, on a illustré une barrette, conforme à celle de la figure 7 et dont les éléments ont été référencés identiquement, associée au papier balayé pour son impression. Dans cette figure, le support 50 est rigide et rend la barrette plate. Le papier électrosensible balayé désigné par la référence 70 est tendu sur un rouleau 71 au niveau de la zone des stylets 51—52, ce rouleau constituant une référence mécanique pour la commande d'avance du papier (simplement illustrée par la flèche F sur le rouleau) alors que la barrette est appliquée sur le papier.

Dans la figure 10, on a illustré de façon schématique un barrette, conforme à celle de la figure 7, dont la zone des stylets est mise, vue en coupe perpendiculaire à la longueur, en forme d'arc de cercle sur lequel vient s'appuyer le papier électro-sensible à imprimer, seuls les principaux éléments de la barrette ont été représentés. Dans cette figure, le support 50' équipé de manière analogue au support 50 est souple. Il est collé sur un support auxiliaire rigide 72 dont une portion de sa surface extérieure forme en coupe un arc de cercle. La zone des stylets 51', 52' est portée par cette portion arrondie. Le papier électro-sensible désigné par la référence 70', monté sur deux rouleaux 73 et 74 disposées de part et d'autre de la portion arrondie de la barrette, vient en appui contre cette portion arrondie qui le tend. Le rouleau 73 constitue une référence mécanique pour la commande d'avance du papier (simplement illustrée par la flèche F' sur ce rouleau) alors que le papier est en appui contre la zone des stylets de la barrette.

On notera, en regard du type de réalisation selon la figure 10 que la zone des stylets n'a pas été formée sur la partie médiane du support 50' mais a été déportée d'un côté de cette partie médiane. Ceci permet de réduire l'encombrement, en largeur, de la barrette: la portion la plus large du support 50' est repliée sous le support auxiliaire rigide 72 échancré à cet effet, ainsi qu'il apparaît dans a figure 10, le film équipé de pastilles et la bande d'interconnexion correspondante, 58' et 56', 57' et 55' respectivement dans cette figure, étant alors situés au niveau de cette échancrure. Grâce à cette disposition particulière, en outre, les deux films, 57' et 58', portant les pastilles à étages registres sont équipés identiquement.

Bien entendu, ces deux types de réalisation donnés dans les figures 9 et 10 s'appliquent aux divers modes de réalisation décrits précédemment. Les barrettes résultantes, à support rigide, seront plates, celles à support souple seront mises en forme sur un support auxiliaire rigide de forme appropriée.

Le fonctionnement de la barrette selon l'invention est donné ci-après en désignant par D les données à reproduire sur chaque ligne de balayage du papier électro-sensible, ces données D étant issues de l'analyse de chaque ligne de balayage d'un document dont le contenu est à reproduire. On a également désigné par DI et par DP respectivement les informations ou données de rangs impairs et pairs, ou informations impaires et paires prélevées des données D relatives à une même ligne ou deux lignes différentes, selon que les stylets de la barrette sont organisés en une ou deux rangées, qui sont appliquées aux deux registres à décalage formés par les pastilles à étages registres des deux zones de commande pour alimenter les stylets de rangs impairs et les stylets de rangs pairs dans la zone des stylets, respectivement.

Une barrette d'impression selon l'invention conforme à un des modes de réalisation décrits ci-avant, à l'exception de celui illustré dans la figure 6, fonctionne par phases successives de trois opérations élémentaires successives suivantes:

— une opération de chargement de chacun des deux registres, avec les informations impaires et paires DI et DP respectivement de la ou des lignes concernées par les stylets, appliquées, en série et au rythme de l'horloge H de chacun des registres, sur l'entrée e de l'un et l'autre des registres respectivement, les sorties en parallèle étant alors bloquées au niveau logique 1, dans l'exemple mentionné ci-avant, qui n'entraîne pas de modification de coloration du papier,

— une opération d'inscription des points correspondant aux données DI et DP chargées dans les deux registres respectivement, les sorties registre étant alors débloquées,

— une opération de progression du papier électro-sensible d'un pas par rapport à la barrette, avec mise forcée des sorties des registres à l'état 0, dans l'exemple mentionné ci-avant, qui n'entraîne pas de modification de coloration du papier.

A titre d'exemple, pour une durée de l'ensemble de ces trois opérations de 20 ms, on précise que l'on affecte à l'opération de chargement 1,33 ms (H=650 kHz pour le chargement des 864 données dans chaque registre de la barrette), à l'opération d'inscription 8,67 ms, et à l'opération de progression 10 ms.

Dans le cas d'une barrette conforme à celle illustrée dans la figure 6, l'opération précédente d'inscription des points s'effectue pendant l'opération de progression du papier, la remise à zéro des étages registres n'intervenant qu'en fin d'opération de progression du papier dont la durée est par exemple de 18,67 ms, la durée de l'opération de chargement des registres étant de 1,33 ms.

On a décrit ci-après un exemple particulier de réalisation d'un ensemble logique de commande que comporte un dispositif d'impression mettant en oeuvre une barrette conforme au schéma électrique de la figure 1, avec deux rangées de stylets séparées par une ligne d'isolement, et appartenant, comme un ensemble de restitution de données transmises (non représenté), à un récepteur de fac-similé.

Ce dispositif d'impression, constitué de cet ensemble logique et de cette barrette, assure la restitution en fac-similé d'un document sur un papier électrosensible qu'il balaye par lignes de balayage successives à partir des données D restituées par l'ensemble de restitution de données et d'informations de rythme également fournies par cet ensemble de restitution de données.

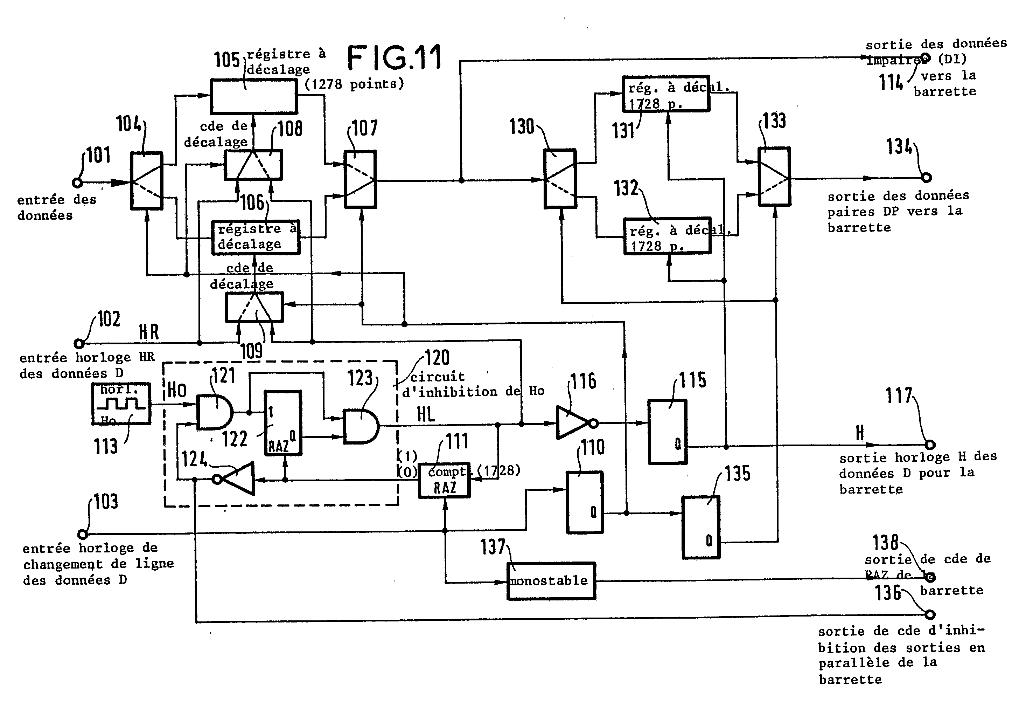

Dans la figure 11 seul l'ensemble logique de commande a été illustré, la barrette étant illustrée par ailleurs.

Cet ensemble logique, disposé en entrée du dispositif d'impression, reçoit sur une entrée 101 les données D restituées par l'ensemble de restitution à un rythme HR d'une horloge de restitution de cet ensemble, les données D traduisent en binaire l'information couleur des points successifs de chaque ligne de balayage. Ces données D sont appliquées, en série et au rythme HR du signal d'horloge de restitution des données D, sur l'entrée 101; le signal d'horloge au rythme HR, ou signal d'horloge HR, est appliqué sur une entrée 102 de l'ensemble logique. Dans les données D, on a considéré que la couleur blanche est traduite par un niveau logique 0 et la couleur noire par un niveau logique 1.

On précise encore que les données D issues de l'ensemble de restitution des données du récepteur fac-similé, au rythme HR, forment des groupes, correspondant à une même ligne de balayage, les premières données respectives de deux groupes successifs étant séparées l'une de l'autre d'un temps éventuellement variable mais toujours au moins égal à un temps minimal défini, ici de 20 ms. Ce temps minimal, correspond au temps minimal d'émission du contenu d'une ligne d'analyse suivi d'un mot de synchronisation de ligne (un mot de bourrage étant émis, si nécessaire, juste avant le mot de synchronisation) c'est-à-dire au temps minimal séparant la fin d'émission de deux mots de synchronisation. A la réception, les données D restituées définissant les premiers points respectifs de deux lignes successives à reproduire sont donc séparées par un temps au moins égal à ce temps minimal de 20 ms; la détection des mots de synchronisation par l'ensemble de restitution fournit une information indiquant le changement de ligne de balayage du document analysé à reproduire.

Cet ensemble comporte un circuit d'aiguillage 104 reliant l'entrée 101 à deux mémoires-tampon 105 et 106 constituées chacune par un registre à décalage de capacité égale au nombre de points par ligne de balayage, soit 1728. Un aiguillage 107 à deux entrées et une sortie est placé en sortie de ces deux mémoires ou registres 105 et 106. Chacun de ces deux registres 105 et 106 a en outre son entrée de commande de décalage connectée à un circuit d'aiguillage, désigné par 108 pour le registre 105 et par 109 pour le registre 106, pour recevoir soit le signal d'horloge HR appliqué sur l'entrée 102 soit un signal d'horloge à un rythme HL, ou signal d'horloge HL précisé ci-après. On considère ici que le décalage des informations dans les registres 105 et 106 s'effectue sur les fronts descendants du signal d'horloge HR ou HL.

Une bascule 110 assure par le signal sur sa sortie Q la commande des quatre circuits d'aiguillage 104, 107, 108 et 109. Cette bascule 110 a une entrée de commande de changement d'état reliée à une entrée 103 de cet ensemble recevant une brève impulsion dite de changement de ligne chaque fois que l'ensemble de restitution précité a délivré les données D concernant une ligne complète de balayage, c'est-à-dire à la fin de la détection de chaque mot de synchronisation ligne et recevant, en outre, en fin de reproduction du document, une brève impulsion à l'issue de chacune des deux phases de fonctionnement au cours desquelles, respectivement, la reproduction de la dernière ligne du document est entamée et celle de l'avant dernière ligne est complétée. Ainsi, pour un état donné, par exemple o, de la sortie de cette bascule (cas illustré), le registre 105 reçoit sur son entrée de chargement les données D appliquées à l'entrée 101, pour la prise en charge de ces données D sous la commande du signal HR alors appliqué au registre 105, tandis que le registre 106 se décharge à travers le circuit d'aiguillage 107, sous la commande du signal HL alors appliqué sur l'entrée de commande de décalage de ce registre 106. Pour l'autre état, 1 dans l'exemple considéré, de la sortie de la bascule 110, les rôles des registres 105 et 106 sont permutés par rapport au cas précédent: le registre 105 se décharge sous la commande du signal HL et le registre 106 se charge sous la commande du signal HR.

L'ensemble logique de commande comporte en outre, un compteur par 1728, 111, pour 1728 points par ligne de balayage. Ce compteur reçoit sur une entrée de comptage le signal HL qui commande le déchargement des registres 105 et 106 alternativement, pour compter les données déchargées de l'un et l'autre des registres alternativement. Il délivre sur une sortie, un signal binaire de niveau 1 ou 0 indiquant si la valeur de comptage est égale ou non à 1728. Il présente en outre une entrée de commande de remise à zéro reliée à l'entrée 103 de cet ensemble. Le signal de sortie du compteur 111 commande un circuit d'inhibition 120 d'un signal d'horloge Ho, de fréquence 2H et de rapport cyclique 1, issu d'une horloge 113 reliée à ce circuit d'inhibition, (H=650 kHz dans l'exemple donné ci-avant). Dans le circuit d'inhibition, à la sortie dequel est délivré le signal d'horloge HL, une porte ET 121, à deux entrées, reçoit le signal Ho et le signal de sortie du compteur à travers un inverseur 124. La sortie de cette porte 121 est reliée à une entrée "1" d'une bascule 122 pour la mise à l'état 1 de la sortie Q de cette bascule à chaque front descendant du signal qu'elle reçoit. La sortie de cette porte ET 121 est également reliée à une entrée d'une autre porte ET 123 dont une deuxième entrée est connectée à la sortie Q de la bascule 122. C'est sur la sortie de cette porte ET 123 que le signal HL est délivré. La bascule 122 reçoit, en outre, sur une entrée de remise à zéro, RAZ, le signal de sortie du compteur par 1728, 111, pour son maintien forcé à zéro lorsque ce compteur est à 1728.

Par ce montage, la porte ET 121 bloque ou laisse passer le signal d'horloge Ho selon que le compteur 111 est à 1728 ou non. La bascule 122 et la porte ET 123 assurent un retard minimal, ici d'une demi-période de l'horloge 113, à l'apparition de la première umpulsion, positive, du signal HL à la suite d'une remise à zéro du compteur 111 initialement à 1728 et un calibrage de la largeur de cette première impulsion.

Le registre en déchargement étant par exemple le registre 106, lorsque les données correspondant à une ligne de balayage complète ont été déchargées de ce registre, le compteur 111, qui est alors à 1728, interrompt le signal HL par le circuit d'inhibition 120. Pendant le déchargement du registre 106, le registre 105 se charge: il reçoit les données D concernant la ligne de balayage suivante, au rythme HR. L'impulsion de changement de ligne, issue de l'ensemble de restitution des données D, qui arrive à l'entrée 103 provoque alors, par la bascule 110, la permutation des rôles des registres 105 et 106 et remet à zéro le compteur 111 qui permettra la réapparition du signal HL et ainsi déchargement du registre 105 tandis que le registre 106 reçoit de nouvelles données D. On obtient ainsi à la sortie de l'aiguillage 107 relié alternativement à la sortie du registre 105 et à la sortie du registre 106 un signal formé de paquets de données D; les données de chaque paquet sont délivrées à la cadence 2H et correspondent à une ligne de balayage complète. Ces paquets sont séparés par un intervalle de temps de durée au moins égale à celle des deux opérations d'inscription des points sur le papier électrosensible et de progression du papier.

Le signal de sortie du circuit d'aiguillage 107 est appliqué sur une première sortie de données 114 de l'ensemble de commande; il est associé à un signal d'horloge, qui est l'horloge H des deux registres de la barrette, délivré sur une sortie horloge 117 de l'ensemble à partir de la sortie Q d'une bascule 115 recevant sur une entrée de commande de changement d'état le signal HL à travers un inverseur 116: la sortie Q de la bascule 115 change d'état à chaque front montant du signal HL. Ainsi le signal sur la sortie 114 découpé par les fronts montants du signal à la sortie Q de la bascule 115 constitue les informations impaires DI délivrées à la cadence H sur l'entrée e du registre concerné de la barrette (registre 8 figure 1).

Le signal de sortie du circuit d'aiguillage 107 est également appliqué à travers un aiguillage 130 à deux autres mémoires-tampon 131 et 132, également constituées chacune par un registre à décalage de capacité 1728 pour 1728 points par ligne de balayage. Un autre aiguillage 133 est placé en sortie de ces deux registres 131 et 132 pour relier les sorties de ces registres à une deuxième sortie de données 134 de l'ensemble. Chacun des registres 131 et 132 a en outre une entrée de commande de décalage reliée à la sortie Q de la bascule 115 pour recevoir le signal H, le décalage des informations dans ces registres s'effectue sur les fronts descendants du signal à la sortie Q de la bascule 115.

Les deux circuits d'aiguillage 130 et 133 sont commandés par le signal sur la sortie Q d'une autre bascule 135 ayant une entrée de commande de changement d'état connectée à la sortie Q de la bascule 110: la sortie Q de la bascule 135 change d'état toutes les deux impulsions de changement de ligne. Pour un état donné, par exemple o, de cette bascule 135 (cas illustré), cet état étant maintenu pendant deux lignes de balayage successives définies en 103, le registre 131 reçoit sur son entrée chargement le signal des données en sortie de l'aiguillage 107 pour la prise en charge de ces données sur les fronts descendants du signal H; ces données prises en charge dans le registre 131 correspondent aux points de rangs pairs ou points pairs de deux lignes de balayage successives dont les points impairs de chacune de ces lignes sont définis par les données DI délivrées sur la sortie 114 de l'ensemble simultanément avec le chargement du registre 131. Tandis que le registre 131 se charge, simultanément le registre 132 se décharge, à travers le circuit d'aiguillage 133, également sous la commande des fronts descendants du signal H: les données de même nature que celles chargées dans le registre 132, c'est-à-dire définissant les points pairs et donc appelées DP, mais concernant les deux lignes de balayage précédentes, sont délivrées sur la sortie 134 de l'ensemble. Pour l'autre état, ici 1, de la bascule 135, les rôles des registres 131 et 132 sont permutés par rapport à ceux du cas précédent.

Chaque registre 131 ou 132 considéré alternativement a ainsi pour rôle d'emmagasiner, à la suite l'un de l'autre, les deux groupes de données définissant les points pairs de deux lignes de balayage successives ceci pendant que l'ensemble délivre sur sa sortie 114 à la suite l'un de l'autre les deux groupes de données DI de ces deux lignes de balayage successives considérées, et, sur sa sortie 134, à la suite l'un de l'autre les deux groupes de données paires DP des deux lignes de balayage successives qui précèdent celles considérées. Ainsi, le signal sur la sortie 134 de l'ensemble constitue les informations paires DP délivrées à la cadence H sur l'entrée e de l'autre registre de la barrette (registre 7, figure 1).

L'ensemble logique de commande élabore, en outre, les signaux de commande, des deux registres de la barrette. Le signal de commande de blocage, ici par son niveau 1, des sorties respectives des deux registres (b, figure 1) est constitué par le signal de sortie du compteur par 1728, 111, inversé par l'inverseur 124. Ce signal de blocage est délivré sur une sortie 136 de l'ensemble, connectée à la sortie de l'inverseur 124. Le signal de commande de remise à zéro, ici par son niveau 1, des étages de ces registres (RAZ, figure 1) est obtenu à la sortie d'un monostable 137 dont l'entrée est connectée à l'entrée 103 qui reçoit les impulsions de changement de ligne, la sortie de ce monostable est connectée à une sortie 138 de l'ensemble. Chaque impulsion de changement de ligne met le signal de sortie du monostable 137 au niveau zéro ceci pour une durée prédéterminée pendant laquelle s'effectuent l'opération de chargement des registres de la barrette par les données délivrées en 114 et 134, au rythme du signal H sur la sortie 117 et l'opération d'inscription sur papier des informations.

Au démarrage d'une opération de reproduction d'un document, les registres 105 et 106, 131 et 132 sont initialisés à zéro ainsi que les bascules 110, 115 et 135 tandis que le compteur 111 est initialisé à 1728 (pour éviter cette initialisation on peut prévoir en sortie du compteur 11 une porte ET, non représentée, commandée par le signal de sortie d'une bascule supplémentaire, non représentée, initialisée à l'état o et mise à l'état 1 par les impulsions de changement de ligne).

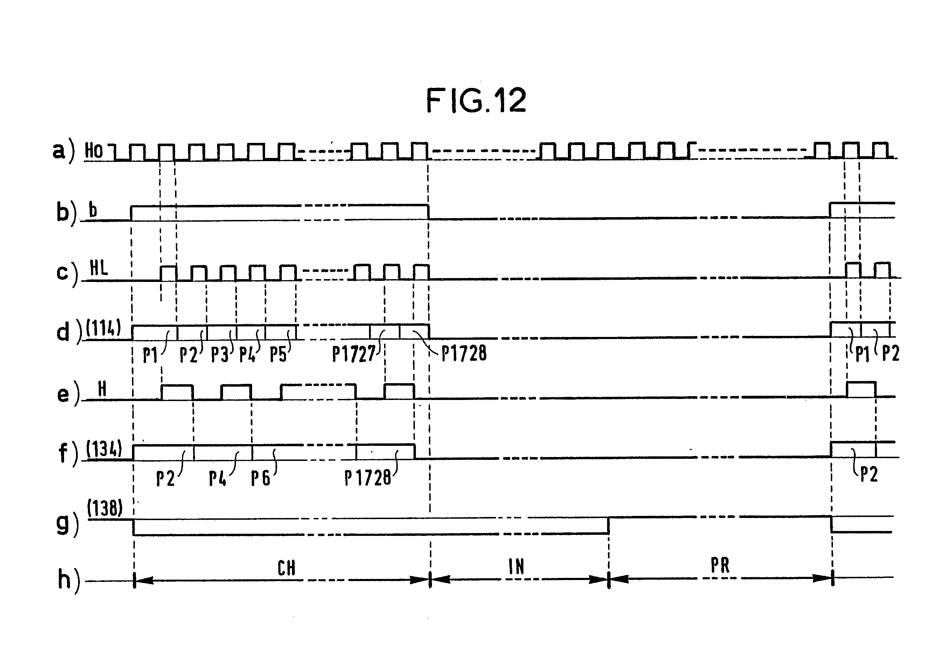

Le diagramme des temps, donné dans la figure 12, illustre les principaux signaux apparaissant dans l'ensemble de commande. On a illustré:

— en a) le signal d'horloge Ho de l'horloge 113,
— en b) le signal de sortie de l'inverseur 124, qui constitue en outre le signal de commande de blocage des sorties de registre de la barrette et que est délivré sur la sortie 136, et en c) le signal HL au rythme Ho délivré tant que le compteur 111 n'est pas à 1728,
— en d) le signal de sortie de l'aiguillage 107 apparaissant sur la sortie 114, ce signal est illustré sous forme d'un rectangle calé d'une part sur le front montant du signal à la sortie de l'inverseur 124 en b) et d'autre part sur les fronts descendants correspondants de ce signal en b) et du signal HL et découpé par le signal HL de commande de décalage des registres lors de leur déchargement pour correspondre aux points $P_1$ à $P_{1728}$ de chaque ligne de balayage,
— en e) le signal d'horloge H délivré par la bascule 115 sur la sortie 117 qui échantillonne par ses fronts montants le signal de sortie en 114 pour fournir les données DI définissant les points impairs $P_1$, $P_3$, $P_5$, ..., $P_{1727}$,
— en f) le signal de données délivré sur la sortie 134, formé à partir du signal de sortie de l'aiguillage 107 antérieurement découpé et chargé dans le registre 131 ou 132 alors en chargement, sous la commande des fronts descendants du signal H, ce signal délivré sur la sortie 134, pour former les données DP, présentant un décalage de deux lignes de balayage par rapport au signal délivré sur la sortie 114, ainsi qu'il a été indiqué ci-avant,
— en g) le signal à la sortie du monostable 137 ou la sortie 138 qui commande la remise à zéro des registres de la barrette
— et en h) les trois opérations successives de chaque phase de fonctionnement de la barrette, découlant du fonctionnement de l'ensemble logique de commande, ces opérations étant notées CH pour celle de chargement des registres de la barrette (avec blocage de leurs sorties), IN pour celle d'inscription des points sur papier et PR pour celle de progression d'un pas du papier (avec remise à zéro des registres); on notera que dans le case où l'intervalle de temps séparant la fin d'émission de deux mots de synchronisation de ligne successifs est variable et peut donc être supérieur à la durée de l'ensemble des trois opérations précédentes, une période de temps mort peut exister entre deux phases successives de fonctionnement, l'état de l'ensemble de commande demeure pendant cette période le même que pendant l'opération de progression du papier.

En vue de la commande des registres à décalage d'une barrette selon l'invention, dans laquelle les stylets sont organisés sur une seule rangée, l'ensemble logique représente dans la figure 11 sera simplifié, les informations DP délivrées à l'entrée e du registre concerné de la barrette étant alors constituées, comme les informations DI, par le signal sur la sortie 114, mais découpé par les fronts montants du signal sur la sortie $\overline{Q}$ (non représentée) de la bascule 115, ce dernier signal étant celui appliqué sur l'entrée horloge dudit registre concerné.

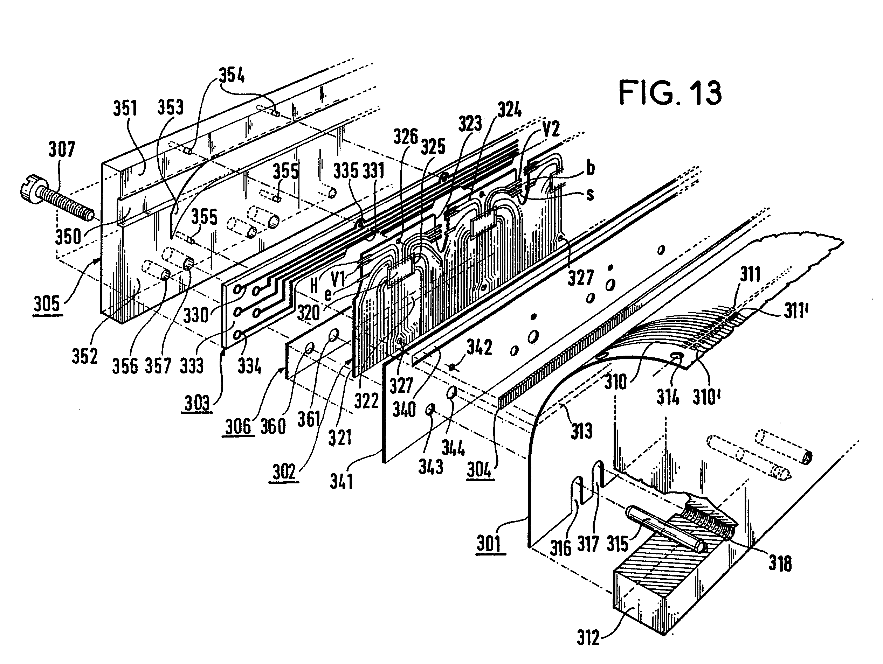

Dans la figure 13, on a illustré une moitié de barrette et simplement ébauché l'autre moitié analogue à celle illustrée. La demi-barrette illustrée comporte un support isolant 301 portant sur l'une de ces faces un réseau de pistes conductrices 310. Des premières extrémités des pistes 310 portent respectivement des stylets 311 s'étendant à pas régulier, en une rangée, sur la longueur du support 301.

Ce support 301 est avantageusement constitué par un film dont une face est imprimée pour la constitution des pistes 310 et des stylets 311. Ce film est monté sur un support auxiliaire rigide 312, la face non imprimée du film étant contre ce support auxiliaire. Ce support auxiliaire, par example en aluminium traité par oxydation anodique et ayant la forme d'une plaque ou toute autre forme appropriée en présentant alors une surface arrondie notamment au niveau des stylets 311, a simplement été esquissé dans cette figure 13 de manière à rendre visibles, par retournement du support 301, les pistes 310 et leurs stylets respectifs 311 et l'ébauche faite de l'autre moitié de la barrette. Ainsi on voit, pour l'autre moitié de la barrette, que ce support 301 porte sur la même face un deuxième réseau de pistes conductrices 310' dont les premières extrémités portent respectivement des stylets 311'. Ces stylets 311' sont au même pas régulier que les stylets 311 et forment une autre rangée de stylets parallèle à la précédente et définissant avec elle une zone longitudinale sur le support 301, dite zone des stylets.

Les seconds extrémités des pistes 310 et 310' des deux réseaux sont situées, pour l'un et l'autre des deux réseaux, de part et d'autre de la zone des stylets, au voisinage de l'un et l'autre des deux bords longitudinaux du support 301, respectivement. Dans chacun des réseaux, les pistes sont ici parallèles les unes aux autres.

Les deux rangées de stylets 311 et 311' sont séparées par une ligne d'isolement de hauteur choisie égale à celle d'une ligne de balayage du papier d'impression. Les stylets de l'une des rangées sont disposés en regard des intervalles entre stylets de l'autre rangée. Dans chacune de ces rangées, les stylets sont au pas double du pas de définition des points d'image le long de chaque ligne de balayage, et l'ensemble des deux rangées comporte autant de stylets qu'il y a de points d'image dans chaque ligne de balayage.

De part et d'autre de la zone des stylets, et au voisinage de cette zone, deux bandes isolantes, non représentées pour la clarté de cette figure 13, sont disposées sur les pistes conductrices 310 et 310' des deux réseaux respectivement, ces deux bandes isolantes sont destinées à assurer l'isolement des pistes 310 et 310' et du papier de type électro-sensible lorsque celui-ci sera balayé par la barrette.

La demi-barrette illustrée comporte également un film 302 porteur de m pastilles à étages registres identiques, 320, alignées sur la longueur du film 302. Chacune de ces m pastilles 320 a une entrée série e des informations, une sortie série s des informations, n sorties de registre en parallèle, également dénommées, de façon plus concise, sorties en parallèle, et des entrées de commande constituées par deux entrées alimentations $V_1$ et $V_2$,

une entrée horloge H et une entrée b de commande d'inhibition des sorties de registre en parallèle. Les nombres m et n sont tels que le produit m . n est au moins égal au nombre de stylets de la demi-barrette.

Le repérage des entrées e, $V_1$, $V_2$, H, b et de la sortie série s de chaque pastille a été reporté sur des extrémités de pistes conductrices et n'a pas été effectué sur la même pastille pour ne pas créer de surcharges excessives au niveau d'une seule pastille; les sorties de registre en parallèle n'ont par contre pas été indiquées, pour ces mêmes motifs.

Les sorties de registre en parallèle des pastilles sont ramenées vers un même longitudinal du film 302, par des pistes conductrices telles que 321 tracées sur l'une des faces du film 302. Ces pistes 321 traversent une zone longitudinale 322 de cette face du film, dans laquelle elles sont au pas régulier des pistes 310 imprimées sur le support 301, ici égal au double du pas de définition des points d'image le long d'une ligne de balayage. L'autre bord longitudinal du film 302 est régulièrement échancré, une échancrure 323 étant formée entre deux pastilles successives. Les entrées e, $V_1$, $V_2$, H, b et la sortie série s de chacune des pastilles sont ramenées par des pistes conductrices telles que 324 sur les bords les plus proches des échancrures adjacentes; ainsi qu'illustré, les entrées H $V_1$ et e d'une pastille sont ramenées sur le même bord le plus proche de l'une des deux échancrures adjacentes à cette pastille et les entrées $V_2$ et b et la sortie série s de cette même pastille sur le bord le plus proche de l'autre de ces deux échancrures. Ces pistes conductrices 324 débordent sur l'échancrure correspondante. Dans chaque échancrure, la sortie série s et l'entrée e qui y sont ramenées sont en vis-à-vis, les autres entrées H, $V_1$, $V_2$ et b sont à des hauteurs différentes sur les bords de chaque échancrure et ne se correspondent pas entre elles ni avec la sortie série s ou l'entrée e. Les entrées de même nature des différentes pastilles, considérées ramenées sur les bords des diverses échancrures, sont alignées sur une même rangée longitudinale, on a donc autant d'alignements que de natures d'entrées, les entrées e et les sorties s étant alignées entre elles. En considérant l'organisation donnee ci-avant, on notera que les entrées e, $V_1$ et H de la pastille à l'une des bord latéral du film qui ne présente à ce niveau qu'une demi-échancrure; les entrées $V_2$ et b et la sortie série s de la pastille à l'autre extrémité du film sont de manière analogue ramenées sur le bord latéral du film ne présentant à ce niveau qu'une demi-échancrure également. Ainsi toutes les pistes 322 et 324 tracées sur une même face du film 302 forment m motifs identiques associés respectivement aux m pastilles.

Les pastilles à étages registres sont montées sur le film 302 selon la phase, dite de transfert sur ruban (ILB) d'un procédé de montage automatique (TAB). Elles sont respectivement disposées dans des fenêtres 325 découpées à cet effet dans le film 302 et dépassent de ces fenêtres du côté de la face non imprimée du film, 302. Chaque pastille est recouverte d'une goutte de vernis protecteur, non représentée sur cette figure 13, déposée sur la face ne débordant pas de la fenêtre, c'est-à-dire côté face imprimée du film 302.

La demi-barrette illustrée comporte, en outre, une réglette 303 d'interconnexion des pastilles portées par le film 302 de manière à former un registre à décalage à m . n sorties en parallèle et une bande 304 d'interconnexion en élastomère à zones conductrices pour les liaisons respectives des sorties de registre en parallèle des pastilles du film 302 en ce qui concerne une partie au moins de ces sorties, dite utiles, et des pistes 310 formées sur le support 301.

A titre d'exemple, on indique que m est égal à 14 et n à 62, pour des lignes de balayage de longueur 216 mm et formées chacune par 1728 points d'image, ceci correspondant à 864 sorties en parallèle utiles dans m pastilles de la demi-barrette, les quatre dernières sorties de la dernière pastille du registre à décalage constitué n'étant pas utilisées.

La réglette 303 est en matériau isolant. Elle porte sur l'une de ses faces, disposée en regard de la face non imprimée du film 302, des pistes conductrices telles que 330 dites pistes d'interconnexion disposées selon quatre lignes continues destinées à assurer les mises en parallèle respectives des entrées H, $V_1$, $V_2$ et b des différentes pastilles lorsque la réglette 303 est appliquée contre le film 302 et disposées selon une cinquième ligne, discontinue, destinée à assurer la liaison de la sortie série s de chaque pastille avec l'entrée e de la pastille suivante.

Cette réglette 303 présente sur l'un de ses bords longitudinaux des découpes 331 pour le passage des pastilles lorsque la réglette et le film 302 sont appliqués l'un countre l'autre. La cinquième ligne formée par les pistes 330 sur la réglette 303 est rendue discontinue par ces découpes 331, elle correspond ainsi aux entrées e et sorties séries s des pastilles, ramenées dans les échancrures 323 du film 302 en étant disposées selon une ligne qui coupe les pastilles.

Afin d'améliorer les liaisons électriques entre les pistes 330 de la réglette 303 et les différentes entrées et les sorties série des pastilles, effectuées ci-avant par pression de la réglette 303 contre le film 302, ces entrées et sorties série seront soudées aux lignes convenables formées par les pistes 330, les soudures étant effectuées au niveau des échancrures 323 du film 302.

La réglette 303 déborde sur un borde latéral du film 302 d'une courte portion. L'extrémité de cette portion, référence 333, est élargie et porte cinq bornes de raccordement 334 auxquelles aboutissent respectivement les cinq lignes formées par les pistes 330. Ces bornes de raccordement sont destinées à permettre les liaisons avec un circuit de commande extérieur et forment les entrées de commande du registre à décalage constitué par l'ensemble des m pastilles interconnectées par les pistes de la réglette 303 ainsi que l'entrée de chargement série du registre à décalage constitué.

La bande 304 d'interconnexion en élastomère à zones conductrices est disposée en sandwich entre le film 302 et le support 301, les faces imprimées du film 302 et du support 301 étant en regard l'une de l'autre. Cette bande 304, montée au niveau de la zone 322 du film 302 et d'une zone analogue 313 du support 301 dans laquelle les pistes 310 sont au même pas que les pistes 321, vient assurer les interconnexions respectives entre les sorties de registre en parallèle utiles des pastilles du film 302 et les pistes 310 du support 301. Cette bande d'interconnexion 304 est disposée dans une fenêtre longitudinale de guidage 340 d'un film auxiliaire 341, de même épaisseur que la bande 304, positionné entre le film 302 des pastilles et le support 301 des pistes 310 et stylets 311. Un des bords longitudinaux de ce film auxiliaire 341 s'étend au niveau d'une ligne située entre la zone 322 du film 302 et la rangée de fenêtres 325 où sont logées les pastilles 320. L'autre bord longitudinal de ce film auxiliaire 341 dépasse du bord longitudinal du film 302, vers lequel sont ramenées les sorties de registre en parallèle des pastilles, il est approximativement au même niveau que le bord longitudinal du support 301 où s'étendent les extrémités des pistes 310, exemptes de stylets.

La réglette 303 et le film 302 des pastilles sont montés sur un support 305 de registre à décalage. Ce support, en aluminium traité par oxydation anodique et de la forme générale d'une plaque rectangulaire, comporte, pour le logement des pastilles 320 du film 302, une rainure longitudinale 350. Cette rainure s'étend sur toute la longueur du support 305 et délimite sur ce support, de part et d'autre d'elle, deux zones longitudinales référencées 351 et 352. La rainure 350 a ses deux bords de hauteurs différentes, les deux zones 351 et 352 sont donc dans des plans distincts, dans le support 305 la partie qui présente la zone 351 étant moins épaisse que celle qui présente la zone 352 cest-à-dire la zone 351 étant en retrait par rapport à la zone 352. L'écart entre les plans des zones 351 et 352 est sensiblement égal à l'épaisseur de la réglette 303, augmentée de celle des pistes que porte cette réglette, qui est disposée contre la zone 351 du support. La face non imprimée de la réglette 303 vient contre la zone 351. Le bord longitudinal à découpes 331 de la réglette 303 surplombe la rainure 350 tandis que l'extrémité 333 portant les bornes de raccordement 334 dépasse longitudinalement du support 305.

Une feuille isolante auto-collante 353 est collée au fond de la rainure 350; cette feuille assure une isolation électrique supplémentaire, le support 305 ayant été au cours de son traitement recouvert d'une couche isolante. Une graisse de silicone, non représentée dans cette figure 13, est déposée sur la feuille 353 et dans la rainure 350, elle sert à dissiper la chaleur dégagée par les pastilles, en cours de fonctionnement.

Le positionnement correct de la réglette 303 et du film 302 et leur maintien sur le support 305 sont assurés par des picots tels que 354 et 355 insérés dans le support 305. Les picots 354 sont régulièrement répartis dans le support 305 selon une rangée longitudinale dans la partie qui présente la zone 351 et sont, ici, en nombre égal à celui des pastilles 320 du film 302. Ces picots 354 dépassent du support 305 du côté de la rainure 350 et sont destinés à venir s'engager chacun dans deux trous de guidage 335 et 326 prévus à cet effet dans la réglette 303 et le film 302 respectivement. Les trous 326 sont disposés dans le film 302 sur une rangée longitudinale au voisinage du bord à échancrures 323, chaque trou étant ici à mi-distance de deux échancrures successives. Les trous de guidage 335 sont disposés dans la réglette 303 sur une rangée longitudinale au voisinage du bord opposé à celui présentant les découpes 331. Les picots 355 sont régulièrement répartis dans le support 305 selon une rangée longitudinale dans la partie qui présente la zone 352 et sont, ici, en nombre égal à celui des pastilles du film 302. Ces picots 355 dépassent du support 305 du côté de la rainure 350, chacun à l'aplomb d'un picot 354. Ils sont destinés à venir s'engager respectivement dans des trous de guidage 327 prévus à cet effet dans le film 302. Ces trous de guidage 327 sont disposés sur une rangée longitudinale au voisinage du bord vers lequel sont ramenées les sorties de registre en parallèle des pastilles, entre ce bord et la zone 322.

Dans ce montage de la réglette 303 et du film 302 sur le support 305, la face non imprimée du film pour la partie s'étendant sensiblement de la rangée des pastilles au bord où sont ramenées les sorties de registre en parallèle, est placée directement contre la zone 352 du support 305, le support et donc cette zone 352 dépassant toutefois de ce bord du film 302. Dans ce montage, un film-cale 306 d'épaisseur sensiblement égale à celle du film 302 augmentée de celle des pistes que porte ce film 302, est prévu et monté dans le prolongement du film 302, du côté du bord longitudinal où sont ramenées les sorties de registre en parallèle. Ce film-cale 306 compense le dénivelé entre les bords longitudinaux, à ce niveau, du support 305 de registre à décalage et du film 302 des pastilles.

Le support 305 avec ses picots 355 assure également le positionnement correct de la bande d'interconnexion 304 montée dans la fenêtre de guidage du film auxiliaire 341. Les extrémités de ces picots 355, qui dépassent du film 302 sont destinées à venir s'engager respectivement dans des trous de guidage 342 prévus à cet effet dans le film auxiliaire 341. Ces trous de guidage 342 sont disposés sur une rangée longitudinale, sensiblement médiane. Les picots 355 coopérant avec les trous de guidage 327 du film 302 et 342 du film auxiliaire 341 permettent de venir positionner la bande d'interconnexion 304 sur la zone 322 du film 302.

Pour des raisons de centrage convenable, le support auxiliaire 312 sur lequel est monté le support 301 des stylets est également pourvu de picots. Ces picots, non représentés dans la figure 13, sont insérés dans le support auxiliaire 312, au voisinage de ses deux extrémités latérales. Les extrémités de ce picots dépassent sur la face du support 312 qui reçoit le support 301 des stylets et sont destinés à venir s'engager respectivement dans des trous de guidage 314 prévus à cet effet dans le support 301. Ces trous de guidage 314 sont formés au voisinage du chacune des deux extrémités latérales du support 301. Ces trous sont avantageusement de forme allongée alors que les picots correspondants sont de section circulaire, ils assurent ainsi un positionnement longitudinal précis du support 301 sur le support auxiliaire 312, tout en laissant un léger jeu latéral possible, rendant un démontage aisé.

Toujours pour des raisons de centrage convenable des différents éléments, on prévoit des goupilles de centrage 315 insérées dans le support auxiliaire 312. Ces goupilles 315 sont réparties sur une rangée longitudinale dans le support auxiliaire 312. Elle dépassent du côté des éléments à centrer et sont destinées chacune à traverser une encoche 316 formée à cet effet sur le bord longitudinal considéré pour la demi-barrette du support 301 des stylets et à s'enfiler dans des trous de guidage 343, 360 et 356 formés à cet effet dans le film auxiliaire 341, le film-cale 306 et le support 305 de registre à décalage, respectivement. Ces goupilles et leurs trous de guidage sont disposés de manière à assurer le positionnement relatif correct du support 305 porteur de la réglette 303, du film 302 équipé des pastilles et prolongé par le film-cale 306, du film auxiliaire 341 porteur de la bande d'interconnexion 304 et du support auxiliaire 312 porteur du support 301 équipé des stylets et de leurs pistes d'alimentation, pour effectuer les connexions respectives des sorties de registre en parallèle utiles des pastilles 320 et des pistes d'alimentation 310 des stylets 311.

Enfin l'assemblage des éléments convenablement positionnés est assuré au moyen de vis telles que 307. Chacune de ces vis 307, qui sont montées alignées avec les goupilles 315, traverse des trous 357, 361 et 344 prévus à cet effet dans le support 305 de registre à décalage, le film-cale 306 et le film auxiliaire 304, respectivement, traverse également une encoche 317 formée à cet effet sur le bord longitudinal correspondant du film 301 porteur des stylets 311 et de leurs pistes d'alimentation pour venir se visser dans un trou taraudé 318 formé dans le support auxiliaire 312.

La formation d'encoches 316 et 317 dans le support 301 porteur des stylets 311 et de leurs pistes, plutôt que de trous de guidage, permet avantageusement de dégager le support 301 des goupilles 315 et des vis 307 sans avoir nécessairement à défaire complètement l'assemblage. Dans cet assemblage on notera également que l'utilisation du film auxiliaire 341 recevant la bande d'interconnexion 304 et du film-cale 306 permet d'éviter l'écrasement de la bande d'interconnexion 304 lors du serrage des vis 307.

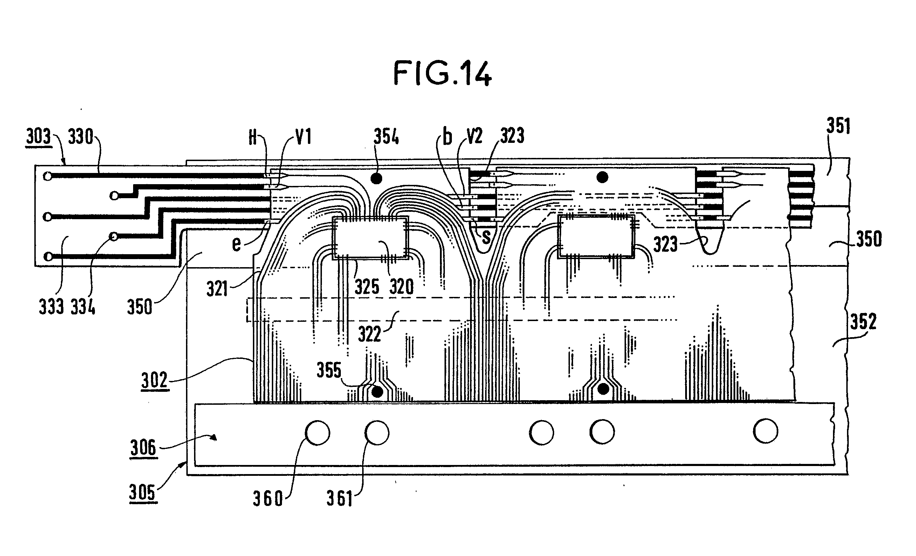

Dans la figure 14 on a illustré la constitution du registre à décalage obtenu par l'association du film 302 porteur des pastilles et de la réglette 303 montés sur le support 305 du registre à décalage, telle que décrite ci-avant en regard de la figure 13.

Dans cette figure 14, les éléments cités au cours de la description de la figure 13 portent les mêmes références, une description supplémentaire de ces éléments n'est plus donnée. On y voit clairement les liaisons respectives effectuées au niveau des échancrures 323 du film 302 entre les pistes de la réglette 303, qui "courent" le long de la face non imprimée du film 302, et les différentes entrées et les sorties des pastilles ramenées au niveau des bords de ces échancrures. On y voit également le film-cale 306 venant prolonger le film 302 du côté du bord longitudinal où sont ramenées les sorties de registre en parallèle et permettant le passage des goupilles de centrage et vis de maintien dans les trous 360 et 361 sans dommage ou agencement particulier des pistes portées par le film 302.

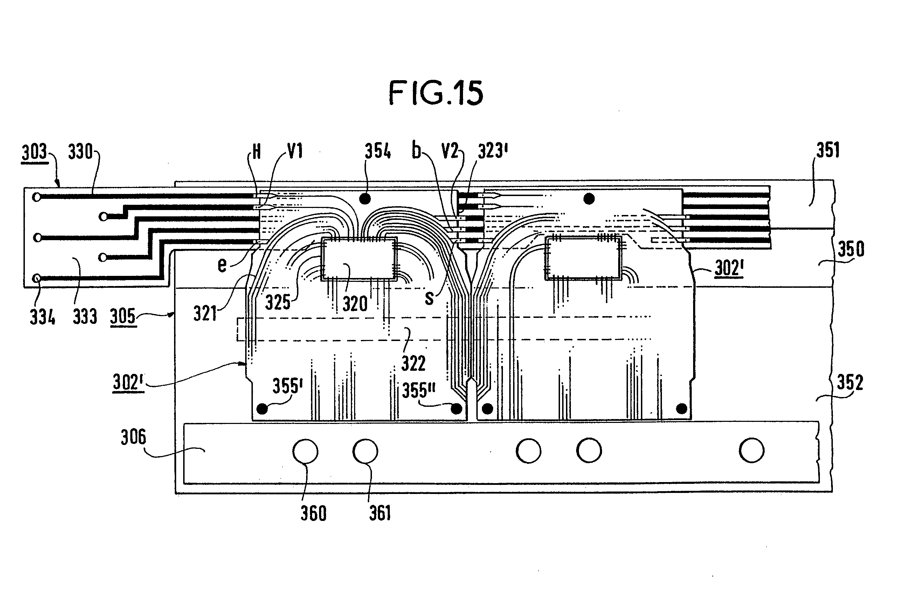

Dans la figure 15, on a illustré par rapport à la figure 14, donc à la figure 13, une variante relative à la constitution du registre à décalage. Dans cette variante on retrouve des éléments identiques à ceux des figures 14 et 13, à savoir le support de registre à décalage, la réglette, le film-cale, ces éléments et leurs parties distinctives visibles sont repérées par les références utilisées précédemment. La constitution de ce registre à décalage diffère de celle du registre illustré dans les figures 13 et 14 essentiellement par le fait que le film porteur des pastilles également désigné par la référence générale 302 est constitué par l'association de m films élémentaires désignés par 302' portant chacun une pastille à étages registres 320 et des pistes 321 connectées aux entrées et aux sorties de cette pastille. Ces pistes 321 forment sur l'une des faces de chaque film élémentaire 302' un motif sensiblement analogue à ceux formés de manière répétitive sur le film unique des pastilles dans les figures 13 et 14.

Chacun de ces films élémentaires 302' présente une demi-échancrure 323' formant un décrochement sur une portion de chacun des deux bords latéraux du film élémentaire considéré; les entrées et la sortie série de la pastille portée par ce film élémentaire sont ramenées sur les bords de l'une et l'autre de ces deux demi-échancrures. Chaque film élémentaire porte un trou de guidage, non référence, formé entre les deux demi-échancrures, au voisinage du bord de ce film élémentaire, dans lequel est engagé un picot du support 305, identique au picot 354 des figures 13 et 14 et de ce fait portant la même référence, en traversant la réglette 303. Chacun des films élémentaires présente en outre deux trous de guidage, non référencés, au voisinage du bord vers lequel sont ramenées les sorties de registre en parallèle et au voisinage respectivement des deux bords latéraux. Ces deux trous de guidage reçoivent deux picots 355' et 355" portés par le support 305. Ces picots 354, 355' et 355" avec les trous de guidage qui leur correspondent dans les films élémentaires respectifs, assurent un positionnement correct des films élémentaires 302' les uns par rapport aux autres et sur le support 305 rendant l'ensemble techniquement équivalent à un film unique.

L'avantage de cette réalisation est le suivant: pour une fabrication de barrettes en série, les pastilles destinées à ces barrettes sont montées, selon une phase, dite de transfert sur ruban (ILB) d'un procédé de montage automatique (TAB), sur un film unique sur lequel sont formées, au préalable, les pistes associées aux pastilles et prolongées par des points de test. Les pastilles sont alors testées individuellement, celles détectées défectueuses étant repérées. Le film unique de départ est ensuite coupé de façon à former les films élémentaires portant chacun une pastille et ses pistes associées, les films élémentaires porteurs de pastilles repérées étant éliminés. Une pastille montée détectée défectueuse n'entraîne donc que sa propre élimination, avec celle du film élémentaire qui la porte, alors que dans le cas d'un réalisation correspondant aux figures 13 et 14 une pastille montée détecté défectueuse entraîne l'élimination avec elle des autres pastilles portées par le même film, soit au total m pastilles.

Cette variante permet en outre de changer les pastilles d'une barrette constituée indépendamment les unes des autres.

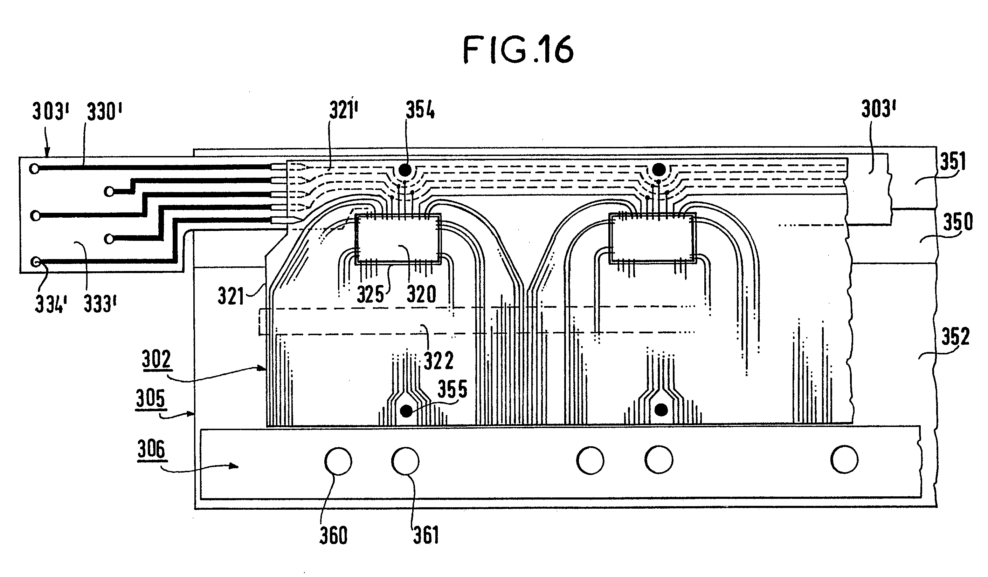

Dans la figure 16 on a illustré une autre variante de réalisation du registre à décalage à partir des m pastilles; cette variante porte essentiellement sur les interconnexions des pastilles.

Pour cette figure 16, seules les différences par rapport à la figure 14 sont décrites ci-après. Le film unique 302 sur lequel sont montées les pastilles 320 est imprimé double face: les pistes 321 formant les sorties de registre en parallèle, ainsi que les pistes reliant la sortie série s de chaque pastille à l'entrée e de la pastille suivante sont imprimées sur l'une des faces, tandis que quatre pistes 321' dites pistes d'interconnexion sont imprimées sur l'autre face, au voisinage de son bord longitudinal, ici non échancré, opposé au bord longitudinal vers lequel sont ramenées les sorties de registre en parallèle.

Ces pistes 321' sont continues et contournent les trous de guidage prévus dans le film, au niveau des pastilles respectivement, pour recevoir les picots 354; elles sont ramenées au moins d'un côté jusqu'au bord latéral du film. Les entrées de commande, $V_1$, H, $V_2$, b de chaque pastille sont légèrement déportées de la pastille au moyen de pistes de très faible longueur imprimées sur la face portant les pistes 321, et sont reliées à travers des trous métallisés respectivement aux quatre pistes 321' qui assurent ainsi les mises en parallèle respectives des entrées de commande de même nature des m pastilles, la technique de connexion par trous métallisés étant en tant que telle connue.

Une réglette 303' de forme et dimension analogues à la réglette 303 de la figure 14 est associée au film, la face portant les pistes 321' étant appliquée contre la réglette 303'. Cette réglette 303' porte sur sa portion débordant du film 302, cinq pistes telles que 330' imprimées sur sa face appliquée contre le film 302 et venant se prolonger dans sa portion terminale élargie 333' en se terminant par des bornes de connexion 334' pour un circuit extérieur de commande et d'entrée des informations.

Ces pistes 330' sont reliées, par soudure, respectivement aux quatre pistes 321' ramenées de ce côté jusqu'au bord latéral du film, et à l'entrée e de la pastille adjacente, également ramenée par une piste imprimée sur la face portant les pistes 321 jusqu'à ce bord latéral.

Dans cette variante, le nombre de connexions à assurer au montage entre pistes de la réglette et pistes du film, ces dernières assurant déjà la mise en parallèle convenable des entrées de commande de même nature des pastilles et la mise en série des pastilles, est réduit au minimum.

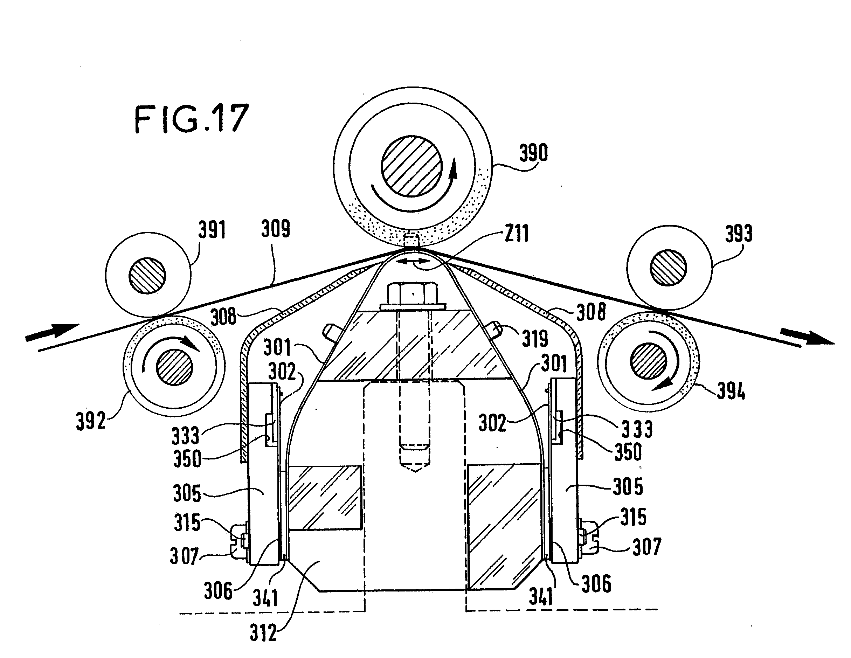

Dans la figure 17, on a illustré une vue de bout d'une barrette complète associée au papier d'impression, la barrette présentant ici dans la partie des stylets dite zone des stylets ou zone d'impression une forme arrondie. Dans cette figure, on distingue, pour chaque moitié de barrette considérée en regard de la figure 13, le support 301 des stylets avec ses pistes d'alimentation, la zone des stylets étant désignée par Z11, le support auxiliaire 312 sur lequel est monté le support ou film 301; ce support définit la forme général de la barrette, sa partie centrale est ici évidée, il porte à ses extrémités des pièces auxiliaires pour la fixation notamment du circuit de commande extérieur. On y distingue, également, monté contre le support 301, de chaque côté extérieur, les deux supports 305 de registre à décalage avec, entre chaque support 305 et le film 301, la réglette dont la portion terminale 333 est visible, le film 302 des pastilles prolongé par le film-cale 306 et le support 341 de la bande d'interconnexion entre les sorties de registre en parallèle utiles et les pistes d'alimentation des stylets. Les vis 307 assurent la fixation de l'ensemble. Un cache-poussière, est en outre prévu; il est formé par deux plaques repliées 308 qui sont montées dans un but de protection sur chaque support 305 et s'étendent jusqu'au voisinage de la zone des stylets Z11.

Le papier repéré en 309 engagé entre deux paires de rouleaux 391, 392 et 393, 394 de part et d'autre de la barrette, défile contre la zone des stylest Z11 sous l'action des rouleaux moteurs 392 et 394, un rouleau auxiliaire 390 au niveau de la zone des stylets Z11 maintenant avec les rouleaux précédents le papier en contact avec cette zone Z11.

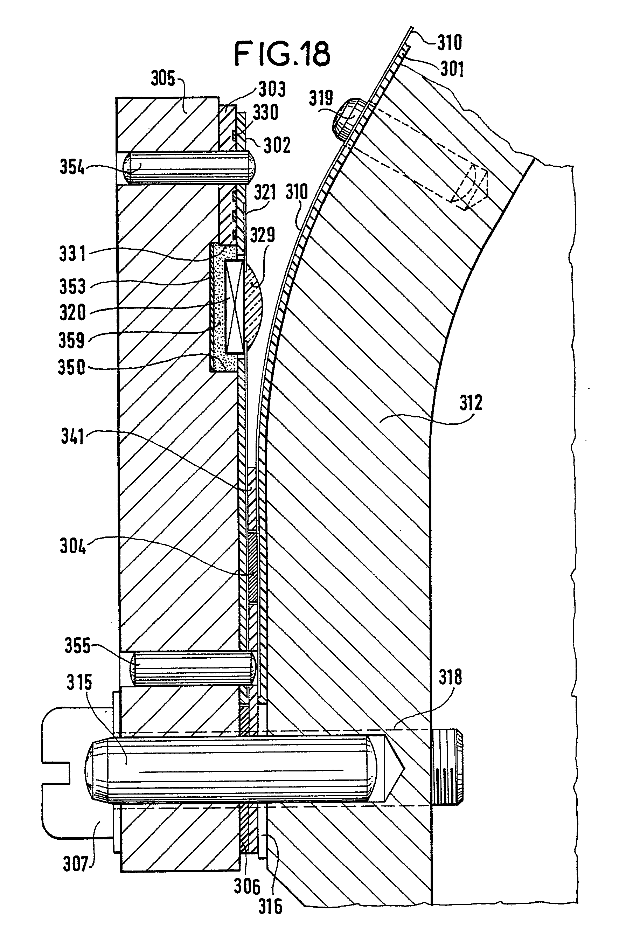

Dans la figure 18, on a illustré une vue partielle, en coupe transversale de la demi-barrette selon la figure 13 et conforme au type de barrette de la figure 17, cette coupe étant faite au niveau d'une pastille. Dans cette figure 18, on voit les éléments constitutifs assemblés, à savoir d'une part le support 305 sur lequel sont centrés par les picots 354 et 355 la réglette 303, ici coupée au niveau de l'une des découpes 331, le film 302 avec l'une des pastilles 320 qu'il porte venant se loger dans la rainure 350 du support 305 et le film-cale 306 venant le prolonger sensiblement jusqu'au niveau du support 305, d'autre part le support auxiliaire 312 sur lequel est positionné par les picots repérés en 319 le support 301 portant les pistes d'alimentation 310 des stylets, et enfin la bande d'interconnexion 304 montée dans la fenêtre du film auxiliaire 341. Le centrage de l'ensemble est obtenu par les goupilles 315 et sa fixation par les vis 307 montées dans les trous taraudés 318.

Dans cette figure 18, on voit également dans la rainure 350 du support 305 la feuille isolante 353 collée sur son fond et la graisse de silicone repérée ici en 359 qui y est déposée pour dissiper la chaleur dégagée par la pastille. On a également représenté en 329 la goutte de vernis protecteur venant recouvrir la face de chaque pastille 320, opposée à celle intérieure à la rainure 350 du support 305.

Afin de faire apparaître les diverses pistes imprimées sur la réglette 303, le film 302 et le support 301, ces pistes ont été représentées logées dans ces éléments; en pratique, elles sont imprimées directement sur leurs faces respectives.

Dans la figure 13 notamment on n'a illustré qu'une partie des éléments appartenant à la barrette complète qui en fait comporte, associé au réseau de pistes d'alimentation 310' des stylets 311', un agencement analogue à celui associé aux pistes 310 et stylets 311, c'est-à-dire faisunt intervenir, comme découlant de la figure 17, un deuxième registre à décalage monté sur un deuxième support et dont les sorties de registre en parallèle utiles sont reliées aux pistes 310' par une autre bande d'interconnexion. De préférence dans une barrette complète réalisée, les deux films 302 porteurs des pastilles à étages registres seront équipés de façon identique (et non pas de façon symétrique). De ce fait, les faces porteuses des pistes à connecter à celles du support 301 des deux films 302 étant tournées l'une vers l'autre et orientées de façon identique dans la barrette montée du type de la figure 17 ou tournées d'un même côté dans une barrette plate où les films 302 seront montées tête-bêche, à la première pastille de l'un des registres à décalage correspond, en vis à vis, la dernière pastille de l'autre registre à décalage, ceci au décalage égal au pas de définition des points d'image d'une ligne de balayage près. Ceci implique que les entrées série des deux registres à décalage reçoivent l'une les données définissant les points d'image de rangs d'une même parité le long d'une ligne de balayage dans l'ordre correspondant à des rangs croissants et l'autre les données définissant les points d'image de rangs de l'autre parité d'une ligne de balayage dans l'ordre correspondant à des rangs décroissants. A cet effet, le circuit de commande extérieur de la barrette, appelé ensemble logique de commande et dont un mode particulier de réalisation a été donné dans la figure 11, sera réalisé avec des mémoires-tampon constituées chacune non d'un registre à décalage comme dans le mode précité mais d'une mémoire vive activée alternativement en chargement c'est-à-dire en écriture et en déchargement c'est-à-dire en lecture et associée à un compteur ou un compteur-décompteur d'adresses initialisé de façon adéquate et permettant de lire dans l'ordre souhaité les données préalablement inscrites.

Au cours du fonctionnement de la barrette, illustrée dans les figures 13 et suivantes on notera également, en regard de l'absence d'entrée de commande de remise à zéro des pastilles à étages registres, que les sorties de registres en parallèle de ces pastilles sont inhibées non seulement pendant l'opération de chargement des deux registres à décalage formés par ces pastilles mais également pendant l'opération d'avance d'un pas du papier, par rapport à la barrette. Le signal de commande d'inhibition peut être obtenu aisément dans le circuit de commande donné dans la figure 11, par exemple à la sortie d'un monostable relié à travers l'inverseur 124 à la sortie du compteur par 1728, 111, de données déchargées de celles des deux mémoires-tampon d'entrée en déchargement, pour 1728 points d'image par ligne de balayage. Dans ce cas, chaque front descendant du signal de sortie de l'inverseur 124 mettrait le signal de sortie de ce monostable au niveau zéro pour une durée prédéterminée pendant laquelle s'effectuerait l'opération d'inscription sur le papier des points d'image.

## Revendications

1. Barrette d'impression d'image, en tout ou rien, sur un papier électrosensible balayé par ligne de balayage successives par ladite barrette, comportant autant de stylets (1,2; 11,12; 11',12'; 31,32; 31',32'; 51, 52; 51',52'; 51'',52''; 311,311'), isolés les uns des autres et formant une zone de stylets de ladite barrette, que de points d'image rentrant dans chaque ligne de balayage et comportant une mémoire, du type registre à décalage, recevant des données définissant lesdits points d'image, ayant une entrée de commande de décalage et des entrées d'alimentation et ayant des sorties en parallèle pour la commande individuelle desdits stylets lor d'une commande d'impression et donc l'inscription desdits points d'image sur ledit papier, caractérisée en ce que ladite mémoire est constituée par 2 m pastilles registres à n étages de mémoire (5,6; 15,16; 35,36; 35',36'; 59,60; 59',60'; 59'',60''; 320) ayant chacune une entrée série de données, n sorties en parallèle, une sortie série de données, et des entrées de commande comprenant une entrée horloge de commande de décalage des données d'un étage au suivant, deux entrées d'alimentation définissant deux niveaux de tension correspondant aux niveaux desdites données et une entrée d'inhibition de ses n sorties en parallèle, m et n étant deux nombres entiers tels que le produit 2 m . n soit au moins égal au nombre des stylets, portées par au moins un film (30,40; 30',40'; 57,58; 57',58'; 57'',58''; 302,302') et montées en série m par m en ayant, d'une part, les entrées d'horloge, d'autre part, les entrées d'inhibition et, par ailleurs, les entrées d'alimentation mises en parallèle, pour y constituer deux registres à décalage distincts chacun à une entrée série de données, à m . n sorties en parallèle connectées, pour une partie au moins des sorties en parallèle successives de ses m pastilles en série constituant alors les sorties en parallèle dites utiles des m pastilles du registre considéré, respectivement aux stylets de rangs de même parité dans ladite zone des stylets, c'est-à-dire aux stylets de rangs impairs et aux stylets de rangs pairs dans la zone des stylets pour l'une et l'autre desdits registres respectivement.

2. Barrette selon la revendication 1, caractérisée en ce qu'au moins un film (30,40; 30',40') est monté sur un support (39,39') et y définit deux parties sensiblement analogues portant respectivement deux réseaux de pistes conductrices (33,34; 33',34') dont des premières extrémités portent respectivement lesdits stylets (31,32; 31',32') et s'étendent à pas régulier pour chaque réseau, dans la zone des stylets ainsi formée, et portant chacune m des pastilles registres (35,36; 35',36'), connectées en série et définissant une zone de commande, dans chacune des parties les deuxièmes extrémités des pistes du réseau étant organisées en m ensembles aboutissant sur la périphérie des pastilles respectives aux sorties en parallèle utiles desquelles elles sont respectivement connectées.

3. Barrette selon la revendication 1, caractérisée en ce qu'elle comporte deux films (30',40') portant chacun d'une part m des pastilles registres (35',36'), connectées en série et montées au voisinage de l'un des bords longitudinaux du film considéré, et portant chacun, d'autre part, un réseau de pistes conductrices (33',34') dont des premières extrémités sont à pas régulier, débordent sur l'autre bord longitudinal du film considéré et portent chacune un desdits stylest (31',32') et dont les deuxièmes extrémités sont organisées en m ensembles aboutissant sur la périphérie des m pastilles aux sorties en parallèle utiles desquelles elles sont respectivement connectées et en ce qu'elle comporte en outre un support (39') sur lequel sont montés lesdits deux films, sensiblement superposés l'un à l'autre, dont les stylets portés par l'un et l'autre forment ladite zone des stylets.

4. Barrette selon la revendication 1, caractérisée en ce qu'elle comporte deux films (57,58; 57',58'; 57'',58''; 302) sur chacun desquels sont montées m des pastilles registres (59,60; 59',60'; 59'',60''; 320), qui sont connectées en série et dont les sorties en parallèle utiles respectives sont rapportées à pas régulier sensiblement le long d'un même bord longitudinal du film considéré et un support isolant (50; 50'; 301) portant deux réseaux de pistes conductrices (53,54; 53',54'; 53'',54''; 310,310') dont des premières extrémités portent les stylest respectifs (51,52; 51',52'; 51'',52''; 311,311') et s'étendent, à pas régulier pour chaque réseau dans une zone longitudinale du support qui forme ladite zone des stylets tandis que les secondes extrémités des pistes des deux réseaux s'étendent, également à pas régulier pour chaque réseau, respectivement dans deux autres zones longitudinales du support situées de part et d'autre de ladite zone des stylets, et sont connectées respectivement pour l'un et l'autre des réseaux aux sorties en parallèle utiles des pastilles de l'un et l'autre des films sur chacun desquels les sorties en parallèle utiles des pastilles sont au même pas régulier que les deuxièmes extrémités des pistes du réseau concerné.

5. Barrette selon la revendication 4, caractérisée en ce qu'elle comporte en outre deux bandes d'interconnexion en élastomère à zones conductrices (55,56; 55',56'; 304) montées et maintenues en sandwich entre le support (50; 50'; 301) et l'un et l'autre des films (57,58; 57',58'; 302) respectivement au niveau desdites deuxièmes extrémités desdites pistes et des sorties en parallèle utiles desdites pastilles en les interconnectant respectivement.

6. Barrette selon l'une des revendications 2, 4 et 5, caractérisée en ce que ledit support (50'; 301) est souple et est monté sur une support auxiliaire rigid (72; 312) dont une portion de sa surface extérieure est arrondie et porte la zone des stylets définie sur ledit support souple.

7. Barrette selon l'une des revendications 2, 4, 5 et 6, caractérisée en ce qu'elle comporte deux bandes d'isolement (41,42; 65; 66) montées, sur la longueur de la zone des stylets, respectivement sur les portions des pistes de l'un et l'autre réseaux, adjacentes à ladite zone des stylets, en les recouvrant respectivement.

8. Barrette d'impression selon la revendication 5, caractérisée en ce que, pour la constitution de chaque registre à décalage, elle comporte une réglette (303; 303') associée au film (302) à m pastilles (320) considéré, en présentant une portion terminale (333; 333') débordant dudit film, une des faces appartenant à la réglette et au film respectivement et destinées à être appliquées l'une contre l'autre portant des pistes conductrices dites pistes d'interconnexion (330; 321'), en nombre au moins égal à celui des entrées de commande de chacune des m pastilles pour assurer les mises en parallèle respectives des entrées de commande de même nature de ces m pastilles (320) tandis que la portion terminale de la réglette porte également des portions de pistes conductrices pour ramener vers l'extérieur de la barrette les entrées du registre à décalage constitué, et un support (305) dit support de registre à décalage sur lequel le film (302) et la réglette (303; 303') prise en sandwich, sont montés, présentant sur une face une rainure longitudinale (350) pour recevoir les pastilles (320) débordant de ce côté du film et dont les deux bords sont à des niveaux différents et définissent sur cette face, de part et d'autre de la rainure, deux zones (351,352) dont l'une (351) est en retrait par rapport à l'autre (352) sensiblement de l'épaisseur de la réglette (303; 303') et est de largeur sensiblement égale à la largeur de cette réglette pour a recevoir.

9. Barrette selon la revendication 8 dans laquelle chaque réglette (303) est imprimée sur sa longueur et porte les pistes d'interconnexion (330) et les portions de pistes sur sa face appliquée contre le film (302) auquel elle est associée, caractérisée en ce que chacun des deux films des m pastilles est échancré sur son bord longitudinal opposé à celui vers lequel sont ramenées les sorties en parallèle des pastilles, des échancrures (323) étant formées entre pastilles successives respectivement, et présente sur sa face opposée à celle appliquée contre la réglette qui lui est associée, outre des pistes conductrices (321) ramenant les sorties en parallèle vers son bord longitudinal considéré, d'autres pistes (324) ramenant l'entrée série, la sortie série et les entrées de commande de chaque pastille respectivement sur les bords voisins des deux échancrures (323) adjacentes à la pastille considérée pour leurs liaisons électriques respectives avec les pistes (330) de la réglette associée (303).

10. Barrette selon l'une des revendications 8 et 9, caractérisée en ce que la rainure longitudinale (350) de chaque support (305) de registre à décalage comporte une graisse de silicone, pour dissiper la chaleur dégagée par les pastilles qui viennent s'y loger.

11. Barrette selon l'une des revendications 8 á 10, caractérisée en ce que chaque support (305) de registre à décalage déborde du film (302) des m pastilles qu'il porte sur le bord de ce film vers lequel sont ramenées les sorties en parallèle des pastilles et qu'elle comporte un film-cale (306) associé à chaque film (302) des m pastilles pour le prolonger pour permettre un montage et une fixation du support correspondant de registre à décalage constitue (305) sur le support (301) portant les deux réseaux de pistes (310; 310') et leurs stylets respectifs (311; 311').

12. Barrette selon l'une des revendications 8 à 11 caractérisée en ce que lesdits deux bandes d'interconnexion (304) en élastomère à zones conductrices sont montées dans deux fenêtres longitudinales (340) de deux films auxiliaires (341) respectivement sensiblement de même épaisseur qu'elles, disposés en sandwich entre l'un et l'autre des films (302) des m pastilles respectivement et le support (301), au niveau des sorties en parallèle des pastilles et de l'un et l'autre desdits réseaux de pistes, respectivement.

13. Barrette selon l'une des revendications 9 á 12, caractérisée en ce que chacun des deux films (302) des m pastilles est constitué par m films élémentaires (302') chacun à une seule pastille, montés côte à côte, avec la réglette (303) associée prise en sandwich sur le support de registre à décalage correspondant (305).

14. Dispositif d'impression d'image, en tout ou rien, sur un papier électrosensible balayé par lignes de balayage successives par ledit dispositif, à partir de données binaires D relatives à chacune des lignes de balayage successives reçues par ce dispositif à un rythme défini par un signal d'horloge HR tandis qu'une impulsion brève, dite impulsion de changement de ligne, lui est en outre appliqué à chaque changement de ligne de balayage concernée par lesdites données D, ledit dispositif mettant en application la barrette selon l'une des revendications 1, 2, 4 et 5 et dans laquelle les stylets pairs et impairs de la zone des stylest sont organisés en deux rangées distantes l'une de l'autre de la hauteur d'une ligne de balayage, caractérisé en ce qu'il comporte, associé à cette barrette, un ensemble logique de commande comportant deux premières mémoires-tampon (105,106) chacune de capacité égale au nombre de points par ligne de balayage, mises alternativement au rythme donné par lesdites impulsions de changement de ligne en chargement des données D reçues par le dispositif sous la commande du signal d'horlage HR et alternativement en déchargement sur une première sortie (114) de l'ensemble et sous la commande d'une signal d'horloge HL, des moyens pour élaborer ledit signal d'horloge HL comportant une horloge de signal Ho (113) associée à un compteur (111) recevant en entrée ledit signal HL et commandant, par son état de comptage égal au nombre de points par ligne, le blocage du signal Ho et, par sa remise à l'état zéro effectuée par chaque impulsion de changement de ligne, le passage dudit signal Ho qui constitue alors ledit signal HL, et deux deuxièmes mémoires-tampon (131,132) chacune de capacité égale au nombre de points par ligne de balayage, alternativement au rythme donné toutes les deux impulsions de changement de ligne, en chargement à partir des données sur ladite première sortie (114) sous la commande d'un signal H de rythme moitié de celui du signal HL, et alternativement en déchargement sur une deuxième sortie (134) de l'ensembls sous la commande dudit signal H, ledit ensemble ayant lesdites première et deuxième sorties (114,134) reliées respectivement à l'entrée série desdits registres à décalage de la barrette pour leur chargement sous la commande dudit signal H appliqué sur l'entrée de commande de décalage de chacun de ces registres et fournissant, à partir dudit compteur (111), un signal de blocage appliqué sur l'entrée d'inhibition des sorties en parallèle de chacun des registres de la barrette pour assurer le blocage de ces sorties en parallèle lorsque l'état de comptage de ce compteur est différent du nombre de points par ligne de balayage.

15. Dispositif selon la revendication 14, caractérisé en ce que lesdits moyens pour élaborer ledit signal d'horloge HL comportent, outre ladite horloge (113) de signal Ho et ledit compteur (111) associé, un circuit d'inhibition dudit signal Ho (120) formé par une première porte ET (121) recevant ledit signal Ho et commandée par l'état dudit compteur, lorsque celui-ci est différent du nombre de points par ligne de balayage, et une bascule (122) dont l'entrée de commande est connectée à la sortie de ladite première porte ET (121) pour la mise de sa sortie à l'état 1 à chaque front descendant du signal de sortie de ladite première porte ET et une deuxième porte ET (123) reliée à l'entrée et à la sortie de ladite bascule pour délivrer ledit signal HL sur sa sortie.

16. Procédé de réalisation d'une barrette selon la revendication 2, caractérisé en ce qu'il consiste à définir sur un même film, de longueur au moins double de cells de la barrette, des emplacements pour lesdites 2 m pastilles, au voisinage de l'un de ses bords longitudinaux, à former juxtaposés sur le film les deux réseaux de pistes conductrices, ces pistes partant, en 2 m ensembles pour les deux réseaux, des emplacements affectés aux pastilles et aboutissant au voisinage de l'autre bord longitudinal du film le long duquel elles sont à pas régulier et constituent lesdites premières extrémités, à déposer électrolytiquement sur chacune desdites premières extrémités des pistes un matériau conducteur résistant à l'abrasion pour former les stylets, à monter lesdites pastilles sur ledit film aux emplacements respectifs qui leur sont affectés en utilisant une phase, dite de transfert sur ruban (ILB), d'un procédé de montage automatique (TAB), ceci en assurant les liaisons desdites sorties en parallèle utiles des pastilles sur les pistes des ensembles respectifs et la mise en série des pastilles pour constituer, juxtaposés sur le film, les deux registres à décalage, et à découper ledit film pour constituer lesdites deux parties sensiblement analogues montées décalées latéralement sur ledit support pour constituer respectivement les stylets pairs et impairs de la zone des stylets.

17. Procédé de réalisation d'une barrette selon la revendication 2, caractérisé en ce qu'il consiste à définir sur un même film des emplacements pour lesdites 2 m pastilles à étages registres au voisinage respectivement d l'un et l'autre de ces deux bords longitudinaux, à former sur le film les deux réseaux de pistes conductrices, sensiblement symétriques l'un de l'autre par rapport à l'axe longitudinal médian du film, ces pistes partant, en m ensembles pour chaque réseau, des emplacements respectifs des pastilles et aboutissant, à pas régulier entre elles mais décalées latéralement d'un réseau à l'autre, en constituant lesdites premières extrémités, au voisinage dudit axe médian du film, à déposer électrolytiquement sur chacune desdites premières extrémités des pistes un matériau conducteur résistant à l'abrasion pour former les stylets pairs et impairs de la zone des stylets, à monter lesdites pastilles sur ledit film aux emplacements respectifs qui leur sont affectés en utilisant une phase, dite de transfert sur ruban (ILB), d'un procédé de montage automatique (TAB), ceci en assurant les liaisons desdits sorties en parallèle utiles des pastilles sur les pistes des ensembles respectifs et la mise en série des pastilles pour constituer les deux registres à décalage, et à monter le film sur ledit support.

18. Procédé de réalisation d'une barrette selon la revendication 3, caractérisé en ce qu'il consiste à définir sur un même film, de longueur au moins double de celle de la barrette, des emplacements pour lesdites 2 m pastilles, au voisinage de l'un de ses bords longitudinaux, à former juxtaposés sur ledit même film, les deux réseaux de pistes conductrices, ces pistes partant, en 2 m ensembles pour les deux réseaux, des emplacements affectés aux pastilles et aboutissant au voisinage de l'autre bord longitudinal dudit même film le long duquel elles débordent pour constituer lesdites premières extrémités des pistes et sont à pas régulier, à déposer électrolytiquement sur chacune desdites premières extrémités des pistes un matériau conducteur résistant à l'abrasion pour former les stylets, à monter lesdites pastilles sur ledit même film aux emplacements respectifs qui leur sont affectés en utilisant une phase, dite de transfert sur ruban (ILB), d'un procédé de montage automatique (TAB), ceci en assurant les liaisons desdites sorties en parallèle utiles des pastilles sur les pistes des ensembles respectifs et la mise en série des pastilles pour constituer, juxtaposés sur ledit même film, les deux registres à décalage, et à découper ledit même film pour constituer lesdits deux films montés sensiblement superposés l'un à l'autre sur ledit ensemble support, avec un décalage latéral l'un par rapport à l'autre pour constituer respectivement les stylets pairs et impairs de la zone des stylets.

19. Procédé de réalisation d'une barrette selon la revendication 4, caractérisé en ce qu'il consiste à former sur ledit support les deux réseaux de pistes conductrices s'étendant, pour l'un et l'autre des réseaux, d'une première zone longitudinale du support où elles sont à pas régulier pour chaque réseau, mais décalées latéralement d'un réseau à l'autre et constituent les premières extrémités à l'une et l'autre respectivement de deux secondes zones longitudinales situées de part et d'autre de ladite première zone respectivement, où elles sont à pas régulier pour chaque réseau et constituent les secondes extrémités, à déposer électrolytiquement sur chacune des premières extrémités des pistes un matériau conducteur et résistant à l'abrasion pour former respectivement les stylets pairs et impairs de la zone des stylets, à monter sur deux films, à des emplacements défins, lesdits 2 m pastilles à étages registres, en nombre m pour chaque film, en utilisant une phase, dite de transfert sur ruban (ILB), d'un procédé de montage automatique (TAB), à ramener d'un même côté et à pas régulier égal à celui des deuxièmes extrémités des pistes d'un des réseaux les sorties en parallèle utiles des pastilles et connecter les m pastilles en série, pour chaque film, à déposer électrolytiquement un matériau conducteur sur chacune des deuxièmes extrémités des pistes ainsi que sur chacune des sorties en parallèle utiles des pastilles ramenées à pas régulier pour former sur chacune d'elles un plot de contact, et à amener et maintenir en contact les plots formés sur les secondes extrémités des pistes des deux réseaux et les plots formés sur les sorties en parallèle utiles des pastilles des deux films, respectivement pour les liaisons respectives de ces pistes et de ces sorties.

20. Procédé de réalisation d'une barrette selon la revendication 5, caractérisé en ce qu'il consiste à former sur ledit support les deux réseaux de pistes conductrices s'étendant, pour l'un et l'autre des réseaux, d'une première zone longitudinale du support où elles sont à pas régulier pour chaque réseau mais décalées latéralement d'un réseau à l'autre et constituent les premières extrémités à l'une et l'autre respectivement de deux secondes zones longitudinales du support situées de part et d'autre de ladite première zone respectivement, où elles sont à pas régulier pour chaque réseau et constituent les secondes extrémités, à déposer électrolytiquement sur chacune des premières extrémités des pistes un matériau conducteur et résistant à l'abrasion pour former respectivement les stylets pairs et impairs de la zone des stylets, à monter sur deux films, à des emplacements définis, lesdites 2 m pastilles à étages registres, en nombre m pour chaque film en utilisant une phase dite de transfert sur ruban (ILB), d'un procédé de montage automatique (TAB), à ramener d'un même côté et à pas régulier égal à celui des deuxièmes extrémités des pistes d'un des réseaux les sorties en parallèle utiles des pastilles et connecter les m pastilles en série, pour chaque film, et à monter et maintenir les deux bandes d'interconnexion entre le support et respectivement l'un et l'autre des films, au niveau des secondes extrémités des pistes et des sorties en parallèle utiles des pastilles pour leurs liaisons respectives.

**Patentansprüche**

1. Balkenförmiger Druckkopf für Schwarz-Weiß-Bilder auf einem stromempfindlichen Papier, das Zeile für Zeile von dem Kopf überstrichen wird, mit ebenso vielen gegeneinander isolierten eine Stiftzone bildenden Schreibstiften (1,2; 11,12; 11',12'; 31,32; 31',32'; 51,52; 51',52'; 51'',52''; 311,311'), wie Bildpunkte pro überstrichener Zeile vorhanden sind, und mit einem Speicher vom Schieberegistertyp, der die Bildpunkte bestimmende Daten zugeführt erhält, einen Schiebesteuereingang und Dateneingänge aufweist und der parallel Ausgänge zur individuellen Ansteuerung der Stifte während einer Drucksteuerung, d.h. während des Beschreibens des Papiers mit den Bildpunkten enthält, dadurch gekennzeichnet, daß der Speicher aus 2 m Registerplatten mit je n Speicherstufen (5,6; 15,16; 35,36; 35',36'; 59,60; 59',60'; 59'',60''; 32) besteht, die je einen Reiheneingang für Daten, n parallele Ausgänge, einen Reihenausgang für Daten und Steuereingänge aufweisen, zu denen ein Takteingang zur Schiebesteuerung der Daten von einer Stufe zur nächsten, zwei Dateneingänge, die zwei Spannungspegel entsprechend den Datenpegeln definieren und ein Sperreingang zur Sperrung der n parallelen Ausgänge gehören, wobei m und n zwei solche ganze Zahlen sind, daß das Produkt 2 m . n mindestens gleich der Anzahl von Stiften ist, wobei die Registerplatten von mindestens einem Film (30,40; 30',40'; 57,58; 57',58'; 57'',58''; 302,302') getragen werden und in Reihe m auf m angeordnet sind und wobei einerseits die Takteingänge und andererseits die Sperreingänge sowie die Dateneingänge parallelgeschaltet sind, um so zwei getrennte Schieberegister mit je einem Serieneingang für die Daten und mit m . n Parallelausgängen zu bilden, die zumindest für einem Teil der aufeinanderfolgenden Parallelausgänge ihrer m in Reihe liegenden Platten, die also die parallelen Nutzausgänge der betrachteten m Registerplatten bilden, je mit den Stiften gleichen Rangs in dem Stiftbereich verbunden sind, d.h. mit den Stiften ungeradzahligen Rangs bzw. geradzahligen Rangs in der Stiftzone für das eine bzw. das andere dieser Register.

2. Balkenförmiger Druckkopf nach Anspruch 1, dadurch gekennzeichnet, daß mindestens ein Film (30,40; 30',40') auf einem Träger (39,39') liegt und dort zwei im wesentlichen analoge Teile definiert, die die beiden Netze von Leiterbahnen (33, 34; 33',34') tragen, wobei die ersten Enden dieser Bahnen die einzelnen Stifte (31,32; 31',32') tragen und sich in regelmäßigen Abständen innerhalb jedes Netzes in dem so gebildeten Stiftbereich erstrecken, und daß jeder der Teile m Register-platten (35,36; 35',36') trägt, die in Reihe miteinander verbunden sind und einen Steuerbereich definieren, wobei in jedem der Teile die zweiten Enden der Leiterbahnen des Netzes in m Gruppen eingeteilt sind, die am Rand der jeweiligen Platten enden und an die jeweiligen Nutzausgänge dieser Platten angeschlossen sind.

3. Balkenförmiger Druckkopf nach Anspruch 1, dadurch gekennzeichnet, daß er zwei Filme (30',40') aufweist, die je einerseits m Registerplatten (35',36'), die in Reihe miteinander verbunden sind und in der Nähe eines der Längsränder des betrachteten Films angeordnet sind, und andererseits je ein Netz von Leiterbahnen (33',34') tragen, deren erste Enden regelmäßige Abstände aufweisen, über den anderen Längsrand des betrachteten Films vorstehen und je einen der Stifte (31',32') tragen, während die zweiten Enden in m Gruppen zusammengefaßt sind, die an Rand der m Platten auf die parallelen Nutzausgänge stoßen, mit denen sie jeweils verbunden sind, und daß er außerdem einen Träger (39') aufweist, auf den die beiden Filme aufgebracht sind, und zwar im wesentlichen einer über dem anderen, wobei die von dem einem und dem anderen Film getragenen Stifte den Stiftbereich bilden.

4. Druckkopf nach Anspruch 1, dadurch gekennzeichnet, daß er zwei Filme (57,58; 57',58'; 57'',58''; 302) aufweist, auf denen je m der Registerplatten (59,60; 59',60'; 59'',60''; 320) aufgebracht sind, die in Reihe miteinander verbunden sind und deren jeweilige parallele Nutzausgänge im wesentlichen mit gleichen Abständen entlang eines gemeinsamen Längsrands des betrachteten Films angebracht sind, und daß der Druckkopf einen isolierenden Träger aufweist (50; 50'; 301) der zwei Netze von Leiterbahnen (53,54;

53',54'; 53'',54''; 310,310') trägt, deren erste Enden die jeweiligen Stifte (51,52; 51',52'; 51'',52''; 311,311') tragen und sich in gleichmäßigem Abstand für jedes Netz in einem Längsbereich des Trägers erstrecken, der den Stiftbereich bildet, während die zweiten Enden der Leiterbahnen der beiden Netze sich ebenfalls in gleichmäßigen Abständen innerhalb jedes Netzes in zwei weiteren Längsbereichen des Trägers erstrecken, die sich zu beiden Seiten der Stiftzone befinden, wobei diese Enden des einen bzw. anderen Netzes mit den parallelen Nutzausgängen der Platten des einen bzw. des anderen Films verbunden sind, auf dem die parallelen Nutzausgänge der Platten im gleichen regelmäßigen Abstand wie die zweiten enden der Leiterbahn des betrachteten Netzes angeordnet sind.

5. Druckkopf nach Anspruch 4, dadurch gekennzeichnet, daß er außerdem zwei Elastomer-Verbindungsbänder mit leitfähigen Zonen (55,56; 55',56'; 304) aufweist, die in Sandwichform zwischen dem Träger (50; 50', 301) und dem einen bzw. dem anderen Film (57,58; 57',58'; 302) angeordnet und gehalten werden, und zwar in Höhe der zweiten Enden der Leiterbahnen und der parallelen Nutzausgänge der Platten, indem sie diese miteinander verbinden.

6. Druckkopf nach einem der Ansprüche 2, 4 und 5, dadurch gekennzeichnet, daß der Träger (50°; 301) biegsam ist und auf einem starren Hilfsträger (72, 312) aufgebracht ist, von dem ein Teil seiner Außenoberfläche abgerundet ist und den auf dem biegsamen Träger definierten Stiftbereich trägt.

7. Druckkopf nach einem der Ansprüche 2, 4, 5 und 6, dadurch gekennzeichnet, daß er zwei isolierende Bänder (41, 42; 65; 66) trägt, die über die Länge des Stiftbereiches je auf einem Teil der Leiterbahnen des einen und des anderen Netzes benachbart zum Stiftbereich aufgebracht sind und diese Stift jeweils überdecken.

8. Druckkopf nach Anspruch 5, dadurch gekennzeichnet, daß für die Ausbildung jedes Schieberegisters ein Balken (303; 303') vorgesehen ist, der dem betrachteten m Platten (320) tragenden Film (302) zugeordnet ist und einek über den Film hervorragenden Endbereich (333; 333') besitzt, daß eine der dem Balken und dem betreffenden Film zugehörenden Seiten, die bestimmt sind gegeneinander gelegt zu werden, Verbindungs-Leiterbahnen (330; 321') in einer Menge trägt, die mindestens der Anzahl der Steuereingänge jeder der m Platten entspricht, um die Steuereingänge gleicher Art der m Platten (320) parallelschalten zu könne, während der Endbereich der Platte ebenfalls Leiterbahnabschnitte trägt, um die Eingänge des gebildeten Schieberegisters vom Druckkopf nach außen zu leiten, und daß der Druckkopf einem Schieberegisterträger (305) aufweist, auf dem der Film (302) und der in Sandwichform eingeklemmte Balken (303; 303') angeordnet sind, wobei der Schieberegisterträger auf einer Seite eine Längsrinne (350) Aufnahme der über diese Seite des Films vorstehenden Platten aufweist, wobei die beiden Ränder dieses Trägers sich in unterschiedlichen Höhen befinden und auf dieser Seite zu beiden Seiten der Rinne zwei Zonen (351,352) bilden, von denen eine (351) gegenüber der anderen (352) im wesentlichen um die Dicke des Balkens (303,303') weniger weit vorsteht, während die Breite im wesentlichen gleich der Breite des Balkens ist, um diesen Blaken aufnehmen zu können.

9. Druckkopf nach Anspruch 8, bei dem jeder Balken (303) über seine Länge bedruckt ist und Verbindungsleiterbahnen (330) sowie die Leiterbahnabschnitte auf der am zugeordneten Film (302) anliegenden Seite trägt, dadurch gekennzeichnet, daß jeder der beiden Filme der m Platten einen Ausschnitt auf der Längsseite aufweist, die der Längsseite gegenüberliegt, zu der die parallelen Ausgänge der Platten führen, daß Ausschnitte (323) je zwischen aufeinanderfolgenden Platten gebildet sind und daß jeder der beiden Filme auf der dem ihm zugeordneten Balken abgewandten Seite außer den Leiterbahnen (321), die die parallelen Ausgänge an den betrachteten Längsrand führen, weitere Leiterbahnen (324) aufweist, über die der Reiheneingang, der Reihenausgang und die Steuereingänge jeder Platte an die Ränder neben den beiden der betrachteten Platte benachbarten Ausschnitten (323) führen, um sie elektrisch mit den Leiterbahnen (330) des betrachteten Balkens (303) zu verbinden.

10. Druckkopf nach einem der Ansprüche 8 und 9, dadurch gekennzeichnet, daß die Längsrinne (350) jedes Schieberegisterträgers (305) ein Silikonfett aufweist, um die von der Platte, die in die Rinne eingreift, ausgehende Wärme abzuleiten.

11. Druckkopf nach einem der Ansprüche 8 bis 10, dadurch gekennzeichnet, daß jeder Schieberegisterträger (305) über den die m Platten tragenden Film (302) über einem Rand des Films vorsteht, an den die parallelen Ausgänge der Platten geführt sind, und daß der Druckkopf eine Filmunterlage (306) aufweist, die jedem Film (302) der m Platten zugeordnet ist, um ihn zu gerlängern und eine Montage und Befestigung des entsprechenden Schieberegisterträgers (305) zu ermöglichen, der aus dem Träger (301) mit den beiden Netzen von Leiterbahnen (310; 310') und aus den entsprechenden Stiften (311; 311') gebildet wird.

12. Druckkopf nach einem der Ansprüch 8 bis 11, dadurch gekennzeichnet, daß die beiden Leiterbahnen tragenden Elastomer-Verbindungsbänder in zwei Längsfenstern (340) zweier Hilfsfilme (341) angeordnet sind, die jeweils im wesentlichen die gleiche Dicke wie die Verbindungsbänder aufweisen und in Sandwichform zwischen dem einen bzw. anderen der beiden Filme (302) der m Platten und dem Träger (301) in Höhe der Paralleausgänge der Platten und des einen bzw. anderen Netzes von Leiterbahnen angeordnet sind.

13. Druckkopf nach einem der Ansprüche 9 bis 12, dadurch gekennzeichnet, daß jeder der beiden Filme (302) der m Platten aus m Elementarfilmen (302') gebildet wird, die je aus einer einzigen Platte bestehen und nebeneinander mit dem zugeordnet Balken (303) in Sandwichform auf dem zugeordneten Schieberegisterträger (305) angeordnet sind.

14. Bilddruckvorrichtung für Schwarz-Weiß-Bilder auf einem stromempfindliche Papier, das Zeile für Zeile nacheinander von der Vorrichtung überstrichen wird, ausgehend von Binärdaten D, die je eine aufeinanderfolgende Abtastzeile betreffen und von der Vorrichtung in dem durch ein Taktsignal HR definierten Rhythmus empfangen werden, während ein kurzer Zeilenwechselimpuls der Vorrichtung bei jedem Wechsel einer von den Binärdaten betroffenen Abtastzeile zugeführt wird, wobei die Vorrichtung den Druckkopf nach einem der Ansprüche 1, 2, 4 und 5 verwendet und die geradzahligen und ungeradzahligen Stifte des Stiftbereichs in zwei gegeneinander um die Höhe einer Abtastzeile voneinander entfernten Reihen organisiert sind, dadurch gekennzeichnet, daß dem Druckkopf eine logische Steuereinheit zugeordnet ist, die zwei erste Pufferspeicher (105,106) einer Kapazitätt aufweist, die der Anzahl von Bildpunkten einer Abtastzeile entspricht, wobei die Pufferspeicher abwechselnd im Takt der Zeilenwechselimpulse auf das Einschreiben der Daten D, die von der Vorrichtung unter Steuerung des Taktsignals HR empfangen werden, und auf das Auslesen über einen ersten Ausgang (114) der Einheit und unter Steuerung durch ein Taktsignal HL umgeschaltet werden, daß Mittel zur Bildung des Taktsignals HL einen Taktsignalgeber Ho (113) und diesem zugeordnet einem Zähler (111) aufweisen, der eingangsseitig das Signal HL zugeführt erhält und durch seinen der Anzahl der Bildpunkt entsprechenden Zähler stand die Sperrung des Signals Ho sowie durch seine von jedem Zeilenwechselimpuls bewirkte Rückstellung auf Null den Durchlaß des Signals Ho steuert, das somit das Signal HL darstellt, und daß die logische Steuereinheit außerdem zwei zweite Pufferspeicher (131,132) aufweist, deren Kapazität je der Anzahl von Bildpunkten einer Abtastzeile entspricht und die abwechselnd im Takt je zweier Zeilenwechselimpulse, die am genannten ersten Ausgang (114) vorliegenden Daten unter Steuerung durch ein Taktsignal H der halben Frequenz des Signals HL einschreibt, und abwechselnd seinen Inhalt auf einem zweiten Ausgang (134) der Einheit unter Steuerung durch das Signal H ausgibt, wobei die ersten und zweiten Ausgänge (114,134) der Einheit an den Reiheneingang der Schieberegister des Druckkopfes während des Einschreibens unter Steuerung durch das Signal H, das an den Schiebesteuereingang jedes der Schieberegister angelegt wird, angeschlossen sind, und daß diese ersten und zweiten Ausgänge ausgehend vom Zähler (111) ein Sperrsignal an den Sperreingang der Parallelausgänge jedes Registers des Druckkopfes liefern, um die Sperrung dieser Parallelausgänge zu bewirken, wenn der Zählzustand dieses Zählers gerade nicht der Zahl der Bildpunkte pro Zeile entspricht.

15. Vorrichtung nach Anspruch 14, dadurch gekennzeichnet, daß die Mittel zur Erzeugung des Taktsignals HL außer dem Taktgeber (113) des Signals Ho und dem zugeordneten Zähler (111) einen Sperrschaltkreis für das Signal Ho (120) aufweisen, der von einem ersten UND-Glied (121) gebildet wird, das Signal Ho empfängt und vom Zustand des Zählers gesteuert wird, wenn letzterer gerade nicht der Anzahl von Bildpunkten einer Abtastzeile entspricht und daß diese Mittel außerdem eine Kippstufe (122) aufweisen, deren Steuereingang an den Ausgang des ersten UND-Glieds (121) angeschlossen ist, um den Ausgang mit jeder fallenden Flanke des Ausgangssignals des ersten UND-Glieds in den Zustand 1 zu bringen, wobei ein zweites UND-Glied (123) an den Eingang und den Ausgang dieser Kippstufe angeschlossen ist, um an seinem Ausgang das Signal HL zu liefern.

16. Verfahren zur Herstellung eines Druckkopfs nach Anspruch 2, dadurch gekennzeichnet, daß auf einem gemeinsamen Film, der mindestens doppelt so lang wie der Druckkopf ist, Plätze für die zwei m Platten in der Nähe eines seiner Längsränder definiert werden, daß dann auf den Film die beiden Netze von Leiterbahnen übereinander angebracht werden, wobei diese Leiterbahnen in 2 m Gruppen für die beiden Netze von den Plätzen ausgehen, die von den Platten besetzt sind, und in die Nähe des anderen Längsrandes des Films führen, entlang dessen diese Bahnen regelmäßige Abstände besitzen und die genannten ersten Enden bilden, daß dann elektrolytisch auf jedes der ersten Enden der Leiterbahnen ein leitfähiges, abschleiffestes Leiter-material zur Ausbildung der Stifte aufgebracht wird, daß dann die Platten auf dem Film an den entsprechenden hierfür vorgesehenen Stellen aufgebracht werden, indem eine Bandtransferphase (ILB) eines automatischen Bestückungsverfahrens (TAB) verwendet wird, wobei die Verbindungen der parallelen Nutzausgänge der Platten au die entsprechenden Leiterbahnen der Gruppen angeschlossen und die Platten in Reihe miteinander verbunden werden, um die beiden Schieberegister auf dem Film zu bilden, und daß der Film dann zerschnitten wird, um die beiden im wesentlichen analogen Teile zu bilden, die seitlich verschoben auf dem Träger montiert werden, um die geradzahligen bzw. ungeradzahligen Stifte des Stiftbereichs zu bilden.

17. Verfahren zur Herstellung eines Druckkops nach Anspruch 2, dadurch gekennzeichnet, daß auf einem gemeinsamen Film Plätze für die 2 m Registerstufenplatten in der Nähe des einen bzw. anderen Längsrands definiert werden, daß auf dem Film die beiden Netze von Leiterbahnen im wesentlichen symmetrisch zueinander bezüglich der mittleren Längsachse des Films gebildet werden, wobei die Leiterbahnen in m Gruppen für jedes Netz von den jeweiligen Stellen für die Platten ausgehen und in regelmäßigem Abstand zueinander, aber seitlich verschoben von einem Netz zum anderen enden und die genannten ersten Enden in der Nähe der Mittelachse des Films bilden, daß elektrolytisch auf jedes der ersten Enden der Leiterbahnen ein elektrisch leitendes und abschleiffestes Material aufgebracht wird, um die geradzahligen und ungeradzahligen Stifte des Stiftbereichs zu bilden, daß die Platten auf den Film an den ihnen zugeordneten Stellen aufgebracht werden, indem eine Bandtransferphase (ILB) eines automatischen Bestückungsverfahrens (TAB) verwendet wird, wobei die parallelen Nutzausgänge der Platten mit den Leiterbahnen der entsprechenden Gruppen und die Platten in Serie angeschlossen werden, um die beiden Schieberegister zu bilden, und daß der Film auf den Träger aufgebracht wird.

18. Verfahren zur Herstellung eines Druckkopfes nach Anspruch 3, dadurch gekennzeichnet, daß auf einem gemeinsamen Film, der mindestens doppelt so lang wie der Druckkopf ist, Stellen für die 2 m Platten in der Nähe einer seiner Längskanten definiert werden, daß übereinander auf demselben Film die beiden Netze von Leiterbahnen aufgebracht werden, indem die Leiterbahnen in zwei Gruppen für die beiden Netze von den für die Platten vorgesehenen Plätzen ausgehen und in der Nähe des anderen Längsrands desselben Films enden, über den sie vorstehen und wo sie regelmäßige Abstände besitzen, um die ersten Enden der Leiterbahnen zu bilden, daß elektrolytisch auf jedes der ersten Enden der Leiterbahnen ein abschleiffestes elektrisch leitendes Material zur Bildung der Stifte aufgebracht wird, daß die Platten auf demselben Film an den entsprechenden ihnen zugeordneten Stellen montiert werden, indem eine Bandtransferphase (ILB) eines automatischen Bestückungsverfahrens (TAB) benutzt wird, wobei die parallelen Nutzausgänge der Platten mit den Leiterbahnen der entsprechenden Gruppen verbunden und die Platten in Reihe angeschlossen werden, um übereinander auf demselben Film die beiden Schieberegister zu bilden, und daß dieser selbe Film zerschnitten wird, um die beiden im wesentlichen übereinander angeordneten Filme auf dem Trägerganzen zu bilden, und zwar mit einer seitlichen gegenseitigen Verschiebung, so daß die geradzahligen und ungeradzahligen Stifte des Stiftbereichs entstehen.

19. Verfahren zur Herstellung eines Druckkopfes nach Anspruch 4, dadurch gekennzeichnet, daß auf dem Träger die beiden Netze von Leiterbahnen gebildet werden, die sich beide von einer ersten Längszone des Trägers in der sie gleichmäßigen Abstand voneinander besitzen aber von einem Netz zum anderen seitlich verschoben sind und die ersten Enden bilden, bis zu der einen bzw. anderen von zwei zweiten Längszonen erstrecken, die sich zu beiden Seiten der ersten Zone befinden und gleichmäßige Abstände voneinander in jedem Netz besitzen sowie die zweiten Enden bilden, daß elektrolytisch auf jedes der ersten Enden der Leiterbahnen ein abschleiffestes elektrisch leitendes Material aufgebracht wird, um die geradzahligen bzw. ungeradzahligen Stifte des Stiftebereiches zu bilden, daß auf den beiden Filmen an definierten Stellen die 2 m Registerstufenplatten, und zwar m Platten pro Film, aufgebracht werden, indem eine Bandübertragungsphase (ILB) eines automatischen Bestückungsverfahrens (TAB) benutzt wird, daß von nur einer Seite und in regelmäßigem Abstand, der dem Abstand der zweiten Enden der Leiterbahnen eines der Netze entspricht, die parallelen Nutzausgänge der Platten herangeführt werden und daß die m Platten auf jedem Film in Reihe verbunden werden, daß elektrolytisch ein leitendes Material auf jedes der zweiten Enden der Leiterbahnen sowie auf jeden der parallelen Nutzausgänge der in regelmäßigem Abstand angeordneten Platten aufgebracht wird, um auf jeder der Platten einen Kontaktpunkt zu bilden, und daß die auf den zweiten Enden der Leiterbahnen der beiden Netze gebildeten Kontaktpunkte und die auf den parallelen Nutzausgängen der Platten der beiden Filme gebildeten Kontakpunkte miteinander in Berührung gebracht und gehalten werden, um je die Verbindungen dieser Bahnen und dieser Ausgänge zu bilden.

20. Verfahren zur Herstellung eines Druckkopfes nach Anspruch 5, dadurch gekennzeichnet, daß auf dem Träger die beiden Netze von Leiterbahnen gebildet werden, die sich für jedes der beiden Netze von einer ersten Längszone des Trägers, in dem sie einen regelmäßigen Abstand innerhalb jedes Netzes besitzen, aber von einem Netz zum anderen seitlich verschoben sind und die ersten Enden bilden, bis zu der einen bzw. der anderen von zwei zweiten Längszonen des Trägers erstrecken, die sich zu beiden Seiten der ersten zone befinden, wo sie einen gleichmäßigen Abstand innerhalb jedes Netzes besitzen und die zweiten Enden bilden, daß elektrolytisch auf jedes der ersten Enden der Leiterbahnen ein abriebfestes elektrisch leitendes Material zur Ausbildung der geradzahligen bzw. ungeradzahligen Stifte des Stiftebereichs aufgebracht wird, daß auf zwei Filme an definierten Stellen die 2 m Registerstufenplatten aufgebracht werden, und zwar m Platten auf jedem Film, idem eine Bandübertragungsphase (ILB) eines automatischen Bestückungsverfahrens (TAB) benutzt wird, daß von nur einer Seite her und in regelmäßigem Abstand, der dem Abstand der zweiten Enden der Leiterbahnen eines der Netze entspricht, die parallelen Nutzausgänge der Platten herangeführt werden und auf jedem Film die m Platten in Reihe verbunden werden und daß die beiden Verbindungsbänder zwischen dem Träger und dem einen bzw. dem anderen Film in Höhe der zweiten Enden der Leiterbahnen und der parallelen Nutzausgänge der Platten aufgebracht und gehalten werden, um die entsprechenden Verbindungen herzustellen.

## Claims

1. An image printing bar for digitally printing images on a electrosensitive paper which is scanned in successive lines by said bar, comprising as many mutually insulated styli (1,2; 11,12; 11',12'; 31,32; 31',32'; 51,52; 51',52'; 51'',52''; 311,311'), forming a stylus area on said bar, as there are image points in each scanning line, and comprising a shift register type memory which receives data defining the impage points and which has a shift control input, data feed inputs and parallel outputs in order to control individually the said styli during a print control, thereby marking said image points on said paper, characterized in that said memory consists of 2 m register chips each having n storage stages (5,6; 15,16; 35,36; 35',36'; 59,60; 59',60'; 59'',60''; 320), each chip having a serial data input, n parallel outputs, a serial data output and control inputs such as a clock input for controlling the data shift from one stage to the next one, two feed inputs defining two voltage levels corresponding to the data levels, and an inhibition input for inhibiting its n parallel outputs, m and n being integers such that the product 2 . m . n is at least equal to the number of styli, said chips being supported on at least one film (30,40; 30',40'; 57,58; 57',58'; 57'',58''; 302,302') and connected in series m by m in such a way that on the one hand the clock inputs, on the other hand the inhibition inputs and moreover the feed inputs are branched in parallel and constitute two separate shift registers each having a serial data input, m . n parallel outputs, at least some of which, constituting the "useful" parallel outputs of the respective m register chips, are connected to styli of like rank in said stylus area, that means that respective registers are connected to odd ranked styli and to even ranked styli respectively in the stylus area.

2. A bar according to claim 1, characterized in that at least a film (30, 40; 30',40') is mounted on a support (39,39') to define two similar parts carrying respective arrays of conductive tracks (33,34; 33',34'), the first ends of which carry respective styli (31,32; 31',32') and are regularly space in each array in the stylus area thus formed, each film carrying m register chips (35,36; 35',36') connected in series and defining a control area, the second ends of the array tracks in each part being arranged in m sets terminating at the perimeter of respective chips, to respective useful parallel outputs of which they are connected.

3. A bar according to claim 1, characterized in that it comprises two films (30',40') each carrying on the one hand m register chips (35',36') connected in series and disposed adjacent to one longitudinal edge of the respective film, each film carrying on the other hand an array of conductive tracks (33',34') the first ends of which are regularly spaced out along and project beyond the other longitudinal edge of the respective film, and each carrying a respective stylus (31',32'), the second end of said tracks being arranged in m sets terminating on the perimeter of the m chips, to respective useful parallel outputs of which they are connected, the bar further comprising a support (39') on which said two films are mounted, substantially superposed on one another, the styli carried by the respective films forming said stylus area.

4. A bar according to claim 1, characterized in that it comprises two films (57,58; 57',58'; 57'',58''; 302) each carrying m register chips (59,60; 59',60';59'',60''; 320) connected in series, respective useful parallel outputs thereof being regularly spaced out along one longitudinal edge of the respective film, and that the bar comprises an insulating support (50;50'; 301) carrying two arrays of conductive tracks (53,54; 53',54'; 53'',54''; 310,310'), the first ends of which carry respective styli (51,52; 51',52'; 51'',52''; 311,311') and extend, regularly spaced out within each array, in a longitudinal area of the support constituting said stylus area, whereas the second ends of the tracks of both arrays, also regularly spaced out in each array, extend in two other longitudinal areas respectively of the support, one on each side of said stylus area, and are connected to the parallel useful outputs of the chips of one or the other film respectively, on each of which the useful parallel outputs of the chips are regularly spaced out at the same pitch as the second ends of the respective track array.

5. A bar according to claim 4, characterized in that it further comprises two elastomer connection strips with conductive areas (55,56; 55',56'; 304), sandwiched between the support (50; 50', 301) and the respective one of the films (57,58; 57',58'; 302) on the level of said second ends of the tracks, and said useful parallel outputs of said chips, thus providing respective interconnections there between.

6. A stylus bar according to any one of claims 2, 4 and 5, characterized in that said support (50'; 301) is flexible and is mounted on a rigid auxiliary support (72; 312), part of the external surface of which is rounded and supports the stylus area defined on said flexible support.

7. A bar according to one of the claims 2, 4, 5 and 6, characterized in that it comprises two insulating strips (41,42; 65; 66) disposed along the stylus area to cover respective portions of the tracks of the respective arrays adjacent to said stylus area.

8. A printing bar according to claim 5, characterized in that it comprises for the constitution of the shift register a terminal strip (303; 303') associated with each respective film (302) having m chips, having a terminal end portion (333; 333') which projects beyond said film, mating faces of the terminal strip and the film carrying conductive connection tracks (330; 321'), the number of such tracks being at least equal to the number of control inputs of each of the m chips in order to provide the parallel connection of like control inputs of the m chips (320), whereas the terminal portion of the terminal strip also carries portions of conductive tracks providing external connections to the inputs of the shift register which is thus constituted, the printing bar further comprising a shift register support (305) on which the film (302) and the terminal strip (303; 303') are mounted in a sandwich structure and present on one face a longitudinal groove (350) receiving the chips (320) projecting beyond the side of the film, the two edges of said groove being at different levels in order to define on said face, on respective sides of the groove, two areas (351,352) of which one is offset relative to the other (352) by a distance substantially equal to the thickness of the terminal strip (303,303'), said area having a width substantially equal to that of the terminal strip in order to accommodate the latter.

9. A bar according to claim 8, in which the terminal strip (303) is printed along its length and carries the connection tracks (330) and track portions on its surface in contact with the associated film (302), characterized in that each of the two films carrying m chips is notched along its longitudinal edge opposite to that to which the parallel outputs of the chips are applied, notches (323) being arranged between respective consecutive chips, and that each film presents along its side opposite that in contact with the associated terminal strip in addition to the conductive tracks (321) which conduct the parallel outputs to the respective longitudinal edge, other tracks (324) which bring the serial input, the serial output and the control inputs of each chip respectively to the adjacent edges of the two adjacent notches (323) of the respective chips in order to ensure their electric connection with the respective tracks (330) of the associated terminal strip (303).

10. A bar according to one of claims 8 and 9, characterized in that the longitudinal groove (350) of each chip register support (305) comprises a silicone grease in order to dissipate the heat generated by the chips which are accommodated therein.

11. A bar according to one of claims 8 to 10, characterized in that each shift register support (305) projects beyond that edge of the film (302) carrying the m chips to which the parallel outputs of the chips are brought, and that it comprises a film spacer (306) associated to each film (302) of the m chips in order to extend the latter for mounting and fixing the corresponding support of a shift register (305) on the support (301) which carries the two arrays of tracks (310;310') and their respective styli (311;311').

12. A bar according to one of claims 8 to 11, characterized in that the two elastomer connection strips (304) with conductive areas are disposed in two respective longitudinal windows (340) of two auxiliary films (341) of substantially the same thickness as the strips, sandwiched between the respective film (302) carrying m chips and the support (301), at the level of the parallel outputs of the chips and of one or the other track array respectively.

13. A bar according to one of claims 9 to 12, characterized in that each one of the two films (302) carrying m chips is constituted by m elementary films (302') each carrying a single chip, the elementary films being mounted side by side with the associated terminal strip (303) in sandwich configuration on the corresponding shift register support (305).

14. A device for printing binary images on an electrosensitive paper which is scanned in subsequent lines by said device, according to binary data D relative to each successive line and received by the device at a rate defined by a clock signal HR, whereas a short line change pulse is applied to the device on each change of line to which said data D relate, said device incorporating a bar according to one of the claims 1, 2, 4 and 5 and the styli of even and odd ranks of the stylus area being organized in two rows which are offset one from the other by the height of a scanned line, characterized in that it comprises in association with said bar a control logic comprising two buffer memories (105,106), the capacity of each being equal to the number of scanning points per line, alternatively loaded with data received by the device under the control of clock signal HR and unloaded to a first output (114) of the control logic, and under the control of a clock signal HL, means for generating said clock signal HL comprising a clock generator for generating a SIGNAL Ho (113) and an associated counter (111) which receives on its input said signal HL disabling the signal Ho by its counting state corresponding to the number of points per line, said counter being reset to zero by each line change pulse in order to enable said signal Ho which then constitutes said signal HL, the control logic further comprising two second buffer memories (131,132), the capacity of each being equal to the number of scanning points per line, alternatively loaded at a rate corresponding to one half of the rate of the line change pulses, the loaded data coming from the first output (114) under control of a signal H, one half the rate of signal HL, and alternatively unloaded to a second output (134) of the logic under control of said signal H, the control logic having first and second outputs (114,134) which are connected respectively to the serial input of said shift registers of the bar during loading under control of said signal H which is applied to the shift control input of each of the registers, and the counter (111) furnishing a disabling signal applied to the inhibition input for disabling the parallel outputs of each of the bar registers in order to disable these parallel outputs, if the state of this counter is not equal to the number of points per scanning line.

15. A device according to claim 14, characterized in that the means for generating said clock signal HL comprise, in addition to said generator (113) of the signal Ho and of said associated counter (111), a circuit disabling said signal Ho (120), said circuit comprising a first AND gate (121) which receives said signal Ho and is controlled by the state of said counter if said state is not equal to the number of points per scanning line, and comprise a flip-flop (122), the control input of which is connected to the output of the first AND gate (121) so as to provide logic one at its output on each falling edge of the output signal of said first AND gate, a second AND gate (123) being connected to the input and to the output of said flip-flop and providing at its output said signal HL.

16. A method for manufacturing a bar according to claim 2, characterized in that it comprises the steps of defining on a single film, at least twice as long as the bar, respective locations for said 2 m chips adjacent to one longitudinal edge of the film; of forming two juxtaposed arrays of conductive tracks on the film, these tracks beginning in 2 m sets for the two arrays at the locations attributed to the chips and terminating adjacent to the other longitudinal edge of the film along which they are regularly spaced out and constitute said first end; of electrolytically depositing on each of said first ends of tracks a conductive material which resists to abrasion to form the styli; of mounting the chips on said film at their respective location using the Inner Lead Bonding (ILB) phase of the Tape Automatic Bonding (TAB) process so as to connect the useful parallel outputs of the chips to the tracks of the respective arrays and to serially interconnect the chips in order to constitute the two shift registers by juxtaposition on the film; and of cutting said film to constitute said two similar parts mounted in a laterally shifted way on said support to constitute the styli of even and odd rank respectively of the stylus area.

17. A method for manufacturing a bar according to claim 2, characterized in that it comprises the steps of defining on one film locations for the 2 m register stage chips adjacent respectively to the one or the other of the two longitudinal edges; of forming on the film two arrays of conductive tracks, substantially symmetrical relative to the median longitudinal axis of the film, so as to form m sets in each array extending away from respective chip locations to the vicinity of said median axis of the film, along which they are regularly spaced but one array being laterally displaced with respect to the other, and constitute said first ends; of electrolytically depositing on each of said first ends of tracks a conductive material resistant to abrasion to form the styli of even and odd ranks in the stylus area; of mounting said chips on said film at the respective attributed locations using the Inner Lead Bonding (ILB) of a Tape Automatic Bonding (TAB) process, so as to connected said useful parallel output of the chips to the tracks of the respective arrays and to serially interconnect the chips to constitute the two shift registers; and of mounting the film on said support.

18. A method for manufacturing a bar according to claim 3, characterized in that it comprises the steps of defining on one film, at least twice as long as the stylus bar, respective locations for said 2 m chips adjacent to one of its longitudinal edges; of forming on said film two juxtaposed arrays of conductive tracks, constituting a total of 2 m sets of tracks in both arrays extending away from the chip locations to the vicinity of the other longitudinal board of said film, along which they project to constitute said first ends of the tracks and are regularly spaced out; of electrolytically depositing on each of said first ends of tracks a conductive material which resists to abrasion to form the styli; of mounting said chips on said one film at the respective attributed locations using the Inner Lead Bonding (ILB) phase of the Tape Automatic Bonding (TAB) process so as to connect the useful parallel outputs of the chips to the tracks of the respective arrays and to interconnect serially the chips to constitute the two shift registers juxtaposed on the film; and of cutting the film to constitute said two similar parts, mounted substantially one on the other and on the support, a lateral shift being provided between both films, in order to constitute the styli of even and odd ranks respectively of the stylus area.

19. A method for manufacturing a bar according to claim 4, characterized in that it comprises the steps of forming on said support the two arrays of conductive tracks extending each array from a first longitudinal area of the support in which they are regularly spaced in each array, but laterally shifted one with respect to the other and constitute said first ends, to respective second longitudinal areas on opposite sides of said first area respectively, in which they are regularly spaced in each array and constitute said second ends; of electrolytically depositing on each of the first track ends a conductive material which resists to the abrasion to form the styli of even and odd ranks respectively of the stylus area; of mounting at predetermined locations on two films said 2 m register state chips, that means m chips on each film, using the Inner Lead Bonding (ILB) phase of a Tape Automated Bonding (TAB) process; of bringing the useful parallel outputs of the chips out to the same edge at a regular pitch equal to that of said second track ends of one array and of connecting the m chips on each film in series; of electrochemically depositing a conductive material on each of the second track ends as well as on each of the useful parallel chip outputs which are brought out at a regular pitch to constitute on each chip a contact tab; and of bringing into and maintaining in contact the tabs of said second track ends of the two arrays and the tabs formed on useful parallel outputs of the chips on the two films, to connect each track to a respective output.

20. A method of manufacturing a bar according to claim 5, characterized in that it comprises the steps of forming on said support the two arrays of conductive tracks extending to each array from a first longitudinal area on the support in which they are regularly spaced in each array and laterally shifted from one another and constitute said first ends, to respective second longitudinal areas on the support on opposite sides of the first zone in which they are regularly spaced in each array and constitute the second ends; of electrolytically depositing on each of the first track ends a conductive material which resists to abrasion to form the styli of even and odd ranks respectively in the stylus area; of mounting on predetermined locations on two films said 2 m register stage chips, that means m chips on each film, using the Inner Lead Bonding (ILB) phase of a Tape Automated Bonding (TAB) process; of bringing the useful parallel outputs of the chips out to one edge at a regular pitch equal to that of the second track ends of one track array and of connecting the m chips serially on each film; and of mounting and maintaining two connection strips between the support and one or the other film respectively at the level of the second ends of the tracks and of the parallel useful outputs of the chips to form the respective connection therebetween.

# FIG. 1

## FIG.2

FIG.3

# FIG.4

# FIG.5

# FIG.6

FIG.7

# FIG.8

0 022 704

FIG.9

FIG.10

FIG.11

# FIG.12

0022704

FIG. 13

# FIG.14

# FIG.15

# FIG.16

303' 330'  321' 354  303'
351
334' 333'  321  325 320  350
302
305  322 355  352
306
360 361

0022704

13

FIG.17

# FIG.18